(19) Europäisches Patentamt / European Patent Office / Office européen des brevets

(11) **EP 4 659 614 A1**

(12) **EUROPEAN PATENT APPLICATION**

(43) Date of publication:
**10.12.2025   Bulletin 2025/50**

(21) Application number: **25177953.4**

(22) Date of filing: **21.05.2025**

(51) International Patent Classification (IPC):
*A43B 13/02* (2022.01)          *A43B 13/04* (2006.01)
*A43B 13/12* (2006.01)          *A43B 13/14* (2006.01)
*A43B 13/18* (2006.01)          *B33Y 80/00* (2015.01)

(52) Cooperative Patent Classification (CPC):
**A43B 13/04; A43B 13/026; A43B 13/125;
A43B 13/141; A43B 13/183; B33Y 80/00;
B33Y 10/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority:  **04.06.2024   US 202463655639 P
18.09.2024   US 202463696065 P**

(71) Applicant: **PUMA SE
91074 Herzogenaurach (DE)**

(72) Inventor: **Donovan, Patrick
90766 Fuerth (DE)**

(74) Representative: **Gosdin, Carstensen & Partner
Patentanwälte Partnerschaftgesellschaft mbB
Adam-Stegerwald-Straße 6
97422 Schweinfurt (DE)**

(54) **ARTICLE OF FOOTWEAR HAVING REINFORCEMENTS**

(57)    A method of manufacturing an article of footwear includes forming a sole structure (300) that uses an additive manufacturing system. The sole structure (300) includes a conduit (128) that extends within a region of the sole structure (300). The conduit (128) includes an end (144) that protrudes outwardly from a surface of the sole structure (300) and a channel (152) defined through the conduit (128). The method also includes connecting the end (144) of the conduit (128) to an injector and injecting a reinforcement material into the channel (152) of the conduit (128) to form a reinforcement member. The method further includes removing a portion of the end (144) of the conduit (128).

FIG. 3

EP 4 659 614 A1

## Description

BACKGROUND

The present disclosure relates generally to an article of footwear including reinforcements and, more specifically, to a sole structure that includes reinforcements within a midsole.

Many conventional shoes or other articles of footwear generally comprise an upper and a sole attached to a lower end of the upper. Conventional shoes further include an internal space, *i.e.,* a void or cavity, which is created by interior surfaces of the upper and sole, that receives a foot of a user before securing the shoe to the foot. The sole is attached to a lower surface or boundary of the upper and is positioned between the upper and the ground. As a result, the sole typically provides stability and cushioning to the user when the shoe is being worn. In some instances, the sole may include multiple components, such as an outsole, a midsole, and a top portion. The outsole may provide traction to a bottom surface of the sole, and the midsole may be attached to an inner surface of the outsole, and may provide cushioning or added stability to the sole. For example, a sole may include a particular foam material that may increase stability at one or more desired locations along the sole, or a foam material that may reduce stress or impact energy on the foot or leg when a user is running, walking, or engaged in another activity. The sole may also include additional components, such as plates, embedded with the sole to increase the overall stiffness of the sole and reduce energy loss during use.

The upper generally extends upward from the sole and defines an interior cavity that completely or partially encases a foot. In most cases, the upper extends over the instep and toe regions of the foot, and across medial and lateral sides thereof. Many articles of footwear may also include a tongue that extends across the instep region to bridge a gap between edges of medial and lateral sides of the upper, which define an opening into the cavity. The tongue may also be disposed below a lacing system and between medial and lateral sides of the upper, to allow for adjustment of shoe tightness. The tongue may further be manipulatable by a user to permit entry or exit of a foot from the internal space or cavity. In addition, the lacing system may allow a user to adjust certain dimensions of the upper or the sole, thereby allowing the upper to accommodate a wide variety of foot types having varying sizes and shapes.

The sole structure of many shoes may comprise a wide variety of materials, which may be utilized to form the sole structure and chosen for use based on one or more intended uses of the shoe. The sole structure may also include portions comprising varying materials specific to a particular area of the sole structure. For example, added stability or energy return may offered by including reinforcements within a front of the sole structure or adjacent a heel region to provide a higher degree of resistance or rigidity. In contrast, other portions of a shoe may include greater flexibility or cushioning properties.

There is a continuing need for articles of footwear with reinforcements for stability, energy return, comfort, and weight savings, as well as efficient methods of manufacturing articles of footwear with such reinforcements.

SUMMARY

An article of footwear, as described herein, may have various configurations.

In some aspects, a method of manufacturing an article of footwear includes forming a sole structure using an additive manufacturing system. The sole structure includes a conduit extending within a region of the sole structure. The conduit includes an end that protrudes outwardly from a surface of the sole structure and a channel defined through the conduit. The method further includes connecting the end of the conduit to an injector, injecting a reinforcement material into the channel of the conduit to form a reinforcement member, and removing a portion of the end the conduit.

In some embodiments, the sole structure includes a lattice region having a lattice structure comprising a plurality of beams interconnected by a plurality of nodes and defining a plurality of voids. In some embodiments, the sole structure includes a midfoot region that is located between a forefoot region and a heel region, a top surface that is opposite a bottom surface, and lateral side that is opposite a medial side, and wherein the conduit is disposed within each of the forefoot, midfoot, and heel regions, and wherein the end of the conduit is adjacent at least one of the top surface or the bottom surface. In some embodiments, a sidewall extends from the lateral side to the medial side and from the forefoot region to the heel region, and wherein the end of the conduit is disposed along the sidewall in at least one of the heel region or the forefoot region.

In some embodiments, the method further includes creating a design model of the sole structure including an arrangement of the conduit. The additive manufacturing system can be configured to receive the design model to form the sole structure. In some embodiments, the method further includes curing the reinforcement material within the sole structure. Curing can include an application of a at least one of a heat, light, or electricity to cure the material. In some embodiments, the sole structure is composed of a material that is different from the reinforcement material that is injected into the conduit to form the reinforcement member. In some embodiments, the conduit extends continuously between opposing first and second ends, and wherein the injector is configured to be connected to both the first and second ends. In some embodiments, the reinforcement material includes a continuous fiber and a resin material. In some embodiments, the injector is configured to apply a pressure differential to the channel of each conduit. In some embodiments, the channel is at least partially filled with the reinforcement material. In some embodiments, the channel is entirely filled with the reinforcement material.

In some aspects, a system for manufacturing an article of footwear includes an additive manufacturing system that is configured to form a sole structure having a lattice structure and at least one conduit extending through a region of the lattice structure. The system further includes an injector that is configured to be connected to an end of the at least one conduit for injecting a reinforcement material into a channel defined by the at least one conduit. Additionally, the system includes a tool that is configured to remove at least a portion of the end of the at least one conduit.

In some embodiments, the reinforcement material includes a resin material that is injected into the channel in a liquid form. In some embodiments, the injector introduces the resin material simultaneously with a continuous fiber bundle. In some embodiments, the injector introduces the resin material and the continuous fiber bundle sequentially. In some embodiments, the system further includes a curing module, by which the reinforcement material is cured to form a reinforcement that has a greater density than a material of the sole structure. In some embodiments, the region of the sole structure has anisotropic properties. In some embodiments, the region of the sole structure includes at least one of a forefoot region, a midfoot region, or a heel region. In some embodiments, the lattice structure includes plurality of beams and a plurality of nodes forming at least one of a triangular pattern or a gyroid pattern. In some embodiments, the plurality of beams include at least one beam that curves between opposing ends. In some embodiments, the plurality of beams include at least one beam that extends linearly between opposing ends.

In some aspects, a sole structure for an article of footwear includes a midsole that includes a plurality of beams interconnected by a plurality of nodes to form a lattice structure and a plurality of reinforcements. The plurality of reinforcements include a channel, a reinforcement material disposed in the channel and comprising a fiber bundle and a resin, and an inlet end that is fluidly connected to an outlet end by the channel. The sole structure further includes an outsole that is applied to a bottom surface of the midsole and an upper attached to a top surface of the sole structure.

In some embodiments, the channel of each reinforcement of the plurality of reinforcements extends continuously from the inlet end to the outlet end. In some embodiments, the fiber bundle extends continuously through at least one reinforcement of the plurality of reinforcements from the inlet end to the outlet end. In some embodiments, the channel of at least one reinforcement of the plurality of reinforcements has a cross-sectional shape selected from the group consisting of: circular, polygonal, and non-polygonal. In some embodiments, the channel of the at least one reinforcement of the plurality of reinforcements has a diameter that varies between the inlet end and the outlet end. In some embodiments, at least one of the inlet end and the outlet end has an edge that is beveled or chamfered. In some embodiments, the plurality of reinforcements include a lateral reinforcement, a central reinforcement, and a medial reinforcement that are spaced apart from one another along the midsole. In some embodiments, the lateral reinforcement protrudes from a lateral sidewall of the sole structure and the medial reinforcement protrudes from a medial sidewall of the sole structure.

In some aspects, a method of manufacturing an article of footwear includes providing a sole plate that has a plurality of recesses and a plurality of cleat ports and forming a support structure and at least one conduit on the sole plate. The method further includes introducing reinforcement material into the at least one conduit to form a reinforcement member and molding a plurality of cleats in locations corresponding to the plurality of cleat ports to form a sole structure.

In some embodiments, the method further includes attaching an upper to a top of the sole structure. The upper is positioned over the support structure and the at least once conduit, and the plurality of cleats are positioned on a bottom of the sole structure. In some embodiments, the step of introducing the reinforcement material into the at least one conduit to form the reinforcement member includes connecting an end of the at least one conduit to an injector. In some embodiments, the support structure and the at least one conduit are molded within the sole structure by an encasing material during the step of molding the plurality of cleats. In some embodiments, the step of forming the support structure and the at least one conduit along the sole plate includes using an additive manufacturing process to form the support structure and the at least one conduit. In some embodiments, the support structure is positioned directly between at least one of the plurality of cleats and a top surface of the sole structure. In some embodiments, the support structure includes a plurality of support regions. At least one of the plurality of support regions is spaced apart from the other plurality of support regions.

In some aspects, a method of manufacturing a sole structure includes providing a sole plate and additively forming a plurality of support regions and at least one conduit on the sole plate. The at least one conduit includes a channel defined through the at least one conduit. The at least one conduit extends through a portion of at least one of the plurality of support regions. The method further includes injecting a reinforcement material into the channel of the at least one conduit to form a reinforcement member. The method also includes molding the sole plate with the plurality of support regions and the at least one conduit within an encasing material.

In some embodiments, the encasing material forms a plurality of cleats. In some embodiments, at least one of the plurality of support regions is positioned directly between at least one of the plurality of cleats and a top surface of the sole structure. In some embodiments, at least one of the plurality of support regions is positioned partially within at least one cleat of the plurality of cleats. In some embodiments, the sole plate includes a plurality of recesses. The plurality of support regions are positioned within the plurality of recesses.

In some aspects, a sole structure for an article of footwear includes a sole plate that has a plurality of recesses and a plurality of support regions disposed within the sole structure and adjacent to the sole plate. Each of the plurality of support regions includes a plurality of beams interconnected by a plurality of nodes to form a support structure. The sole structure further includes at least one reinforcement member that extends within the sole structure. All of the at least one reinforcement members are disposed within the plurality of support regions. Each of the plurality of reinforcement members defines a channel with reinforcement material disposed within the channel. The reinforcement material within each of the channels comprises a fiber bundle and a resin.

In some embodiments, the sole structure includes a plurality of cleats. In some embodiments, each of at least two of the plurality of support regions is positioned directly between at least one of the plurality of cleats and a top surface of the sole structure. In some embodiments, at least one of the plurality of support regions is positioned partially within at least one of the plurality of cleats. In some embodiments, the plurality of support regions include a lateral midfoot support portion and a medial midfoot support portion that are spaced apart form one another. In some embodiments, the lateral midfoot support portion and the medial midfoot support portion are connected by a plurality of support links. In some embodiments, one of the plurality of reinforcement members extends within the lateral midfoot support portion. One of the plurality of reinforcement members extends within the medial midfoot support portion. In some embodiments, the plurality of support regions are encased within the sole structure by an encasing material and are visible through the sole structure from an exterior of the article of footwear.

Other aspects of the article of footwear, including features and advantages thereof, will become apparent to one of ordinary skill in the art upon examination of the figures and detailed description herein. Therefore, all such aspects of the article of footwear are intended to be included in the detailed description and this summary.

BRIEF DESCRIPTION OF THE DRAWINGS

FIG. 1 is schematic diagram of a system for producing a component, according to an embodiment of the present disclosure;

FIG. 2 is a perspective view of an embodiment of a component formed in connection with the system of FIG. 1;

FIG. 3 is a perspective view of a top side, lateral side, and toe end of another embodiment of a component;

FIG. 4 is a perspective view of an article of footwear including the component of FIG. 3, with the component being shown in a finished configuration;

FIG. 5 is a top view of the component of FIG. 3;

FIG. 6 is a bottom view of the component of FIG. 3;

FIG. 7 is a side elevational view of a lateral side of the component of FIG. 3;

FIG. 8 is a side elevational view of a medial side of the component of FIG. 3;

FIG. 9 is a cross-sectional view of the component of FIG. 3 taken along the line 9-9 of FIG. 6;

FIG. 10 is a cross-sectional view of the component of FIG. 3 taken along the line 9-9 of FIG. 6;

FIG. 11 is a cross-sectional view of the component of FIG. 3 taken along the line 9-9 of FIG. 6;

FIG. 12 is a perspective view of a bottom side, lateral side, and toe end of another embodiment of a component formed in connection with the system of FIG. 1, with an outsole being shown on the component;

FIG. 13 is a bottom view of the component of FIG. 12;

FIG. 14 is a top view of the component of FIG. 12;

FIG. 15 is a side elevational view of a lateral side of the component of FIG. 12, with the outsole being removed;

FIG. 16 is a side elevational view of a medial side of the component of FIG. 12, with the outsole being removed;

FIG. 17 is a perspective view of an article of footwear including the component of FIG. 12;

FIG. 18 is a perspective view of a top side, lateral side, and toe end of another embodiment of a component formed in connection with the system of FIG. 1,

FIG. 19 is a bottom view of the component of FIG. 18;

FIG. 20 is a perspective view of the top side, lateral side, and toe end of the component of FIG. 18, with a footboard being shown on the component;

FIG. 21 is a flowchart of an example method of forming an article of manufacture including a component formed in connection with the system of FIG. 1;

FIG. 22 is a schematic diagram of a cross-sectional view of another embodiment of a component formed in connection with the system of FIG. 1;

FIG. 23 is a schematic diagram of a cross-sectional view of another embodiment of a component formed in connection with the system of FIG. 1;

FIG. 24 is a schematic diagram of a cross-sectional view of another embodiment of a component formed in connection with the system of FIG. 1;

FIG. 25 is a bottom view of an embodiment of a sole chassis of a sole structure in a pre-finalized state formed in connection with the system of FIG. 1;

FIG. 26 is a top view of the sole chassis of FIG. 25;

FIG. 27 is a top view of the sole chassis of FIG. 25 in a finalized state;

FIG. 28 is a schematic diagram of a cross-sectional view of the component of FIG. 27;

FIG. 29 is a flowchart of an example method of forming the sole structure of FIGS. 25-28;

FIG. 30 is a top view of another embodiment of a sole chassis of a sole structure in connection with the system of FIG. 1;

FIG. 31A is a schematic diagram of a cross-sectional view of a marriage mold, according to an embodiment of the present disclosure;

FIG. 31B is a perspective view of another embodiment of a component produced using the marriage mold of FIG. 31A;

FIG. 32 is a schematic diagram of yet another embodiment of a sole structure, according to an embodiment of the present disclosure;

FIG. 33 is a schematic diagram of still another embodiment of a sole structure, according to an embodiment of the present disclosure.

FIG. 34 is a side view of an embodiment of the sole structure formed in connection with the schematic diagrams of FIGS. 32 or 22;

FIG. 35 is a schematic diagram of a cross-sectional view of a mold, according to an embodiment of the present disclosure;

FIG. 36A is a schematic diagram of a mold, according to an embodiment of the present disclosure; and

FIG. 36B is a perspective view of another embodiment of a sole structure produced using the mold of FIG. 36A.

DETAILED DESCRIPTION OF THE DRAWINGS

The following discussion and accompanying figures disclose various embodiments or configurations of a shoe and a sole structure. Although embodiments of a shoe or sole structure are disclosed with reference to a sports shoe, such as a running shoe, tennis shoe, basketball shoe, etc., concepts associated with embodiments of the shoe or the sole structure may be applied to a wide range of footwear and footwear styles, including cross-training shoes, football shoes, golf shoes, hiking shoes, hiking boots, ski and snowboard boots, soccer shoes and cleats, walking shoes, and track cleats, for example. Concepts of the shoe or the sole structure may also be applied to articles of footwear that are considered non-athletic, including dress shoes, sandals, loafers, slippers, and heels. In addition to footwear, particular concepts described herein may also be applied and incorporated in other types of apparel or other athletic equipment, including helmets, padding or protective pads, shin guards, and gloves. Even further, particular concepts described herein may be incorporated in cushions, backpack straps, golf clubs, or other consumer or industrial products. Accordingly, concepts described herein may be utilized in a variety of products.

The present disclosure is directed to systems and methods of manufacturing a sole structure having conduits that are configured to be at least partially filled with a composite material that, when cured or hardened, reinforces or strengthens the sole structure. Accordingly, the sole structure includes conduits extending within a region of the sole structure, such as through a midsole. Ends of each conduit are connected to an injector that can introduce the composite material into a channel of each conduit. The composite material within the conduits is then cured or hardened to form the reinforcements. Accordingly, the reinforcements are composed of reinforcement material, *i.e.,* cured and/or treated composite material, and arranged within internal cavities, channels, or circuits within the sole structure. Through the use of additive manufacturing systems and methods, the sole structure can be printed to include the conduits in various configurations, quantities, sizes, and shapes to optimize or customize the reinforcements within the sole structure. In particular, the configurations, quantities, sizes, and shapes of the reinforcement are attained through the use of additive manufacturing techniques to design, arrange, and construct the sole structure with the conduits. To further advance the optimization and customization capabilities, additive manufacturing enables users to form the sole structure with lattice regions having complex geometries, such as, *e.g.,* gyroid structures, auxetic structures, or triangular or polygonal lattice structures, among others. By using additive manufacturing systems and methods, the sole structure and the conduits therein can be formed of the same material, or different materials, and printed layer-by-layer to be a unitary component, which can save time and reduce waste in comparison with conventional or subtractive methods of manufacturing. Through the systems and methods described herein, the sole structure can be reinforced using a composite material containing fiber bundles, such as continuous fiber bundles of carbon fiber, aramid fibers, glass fibers, boron fibers, or natural or organic fibers, among others. Accordingly, high performance reinforcement material can be attained after curing and hardening the composite material in the sole structure, which can reduce the number of steps and entities involved in manufacturing the article of footwear, as well as enabling fewer construction defects and variations in quality.

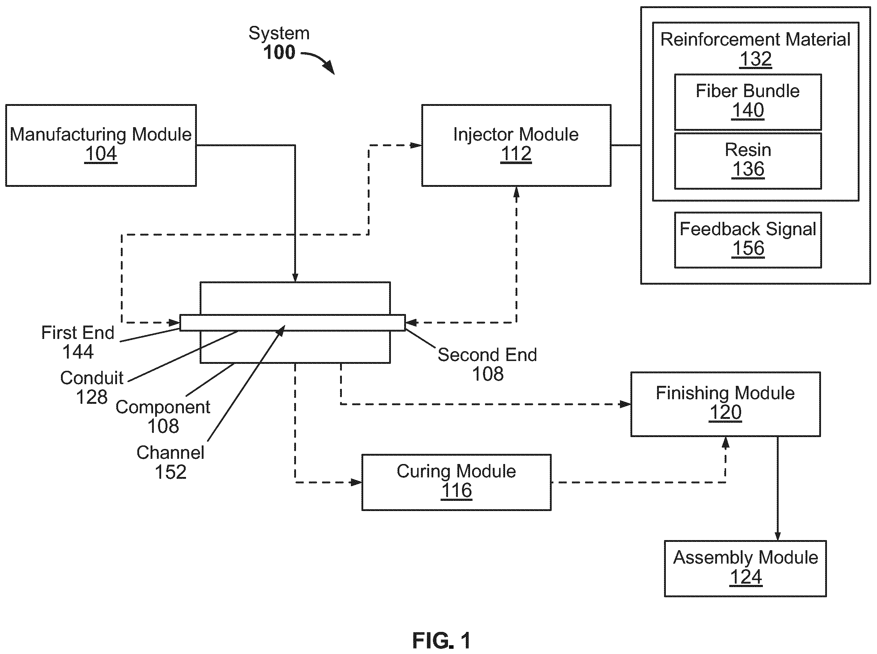

FIG. 1 depicts a schematic diagram of a system 100 that includes a manufacturing module 104 for producing a component 108 of an article of footwear, an injection module 112 for introducing composite reinforcement material into the component 108, a curing module 116 for treating or curing the composite material in the component 108, a finishing module 120 for performing finishing steps, such as, e.g., trimming, cutting, grinding, polishing, etching, engraving, or other post-process steps (such as, *e.g.,* a foaming process or coating process), and an assembly module 124 for assembling the component 108 into an article of footwear. In some embodiments, the manufacturing module 104 includes an additive manufacturing machine or system, which may be referred to herein as a 3D printer or 3-D printer. In some embodiments, the manufacturing module 104 includes an injection molding system, a co-molding system, a compression molding system, a foaming system, a loom, a winding system, or any suitable manufacturing machine or system for producing the component 108 of the article of footwear.

Additive manufacturing is preferred for manufacturing the components according to the present disclosure. The additive manufacturing process employed by the manufacturing module 104 may be carried out using a 3D printer, such as printers manufactured by Formlabs®, HP®, or MarkForged®, which are capable of receiving a design model and generating printing instructions to print the component. A design model may be an electronic three-dimensional representation of a component that is intended to be incorporated in an article of footwear. In some embodiments, the design model may be in the form of a 3DCAD file, or a 3D stereolithographic file (.STL file), or any file compatible with a web-based or cloud-based design program, such as Eiger™ offered by MarkForged®. Various additive manufacturing methods can be used to manufacture a component for an article of footwear according to the present disclosure, which may include binder jetting, direct energy deposition (DED), selective laser sintering (SLS), multi jet fusion (MJF), selective laser melting (SLM), fused deposition modeling (FDM), electron beam melting (EBM), laser powered bed fusion (LPBF), ultrasonic additive manufacturing, material extrusion, material jetting, Joule printing, electrochemical deposition, cold spray metal printing, DLP metal printing, Ultrasonic Consolidation or Ultrasonic Additive Manufacturing (UAM), LENS laser-based printing, vat photopolymerization, sheet lamination, or electron beam freeform fabrication (EBF3).

Referring to FIG. 1, the manufacturing module 104 may further include various machining machines or systems, such as, e.g., milling, grinding, sanding, trimming or cutting, stamping, drilling, compacting, tensioning, or the like. In some instances, the manufacturing module 104 includes the additive manufacturing system to form the conduits 128 of the component 108 and also includes machining systems to further prepare the conduits 128 for use with the injection module 112, such as, *e.g.,* by reducing a surface roughness within the channel 152.

The injection module 112 may include an insertion module that is configured to provide the component 108 with a reinforcement material 132 by introducing a resin 136 and a fiber bundle 140 into and through at least one conduit 128 of the component 108. The reinforcement material 132 comprises the resin 136 and the fiber bundle 140. Accordingly, the conduit 128 is a hollow, tubular structure having a first end 144 that is opposite a second end 148 and defining a channel 152 that extends between the first and second ends 144, 148. As illustrated in FIG. 1, the injection module 112 can be operatively, removably coupled to the first end 144 and the second end 148 of the conduit 128 of the component 108. Accordingly, one of the first end 144 or the second end 148 may be referred to herein as the inlet end, and the other may be referred to as the outlet end. The first end 144 and the second end 148 are configured to be fluidly connected to one another across the channel 152 of the conduit 128. In some embodiments, the injection module 112 is operatively, removably coupled with only one of the first end 144 or the second end 148. In some embodiments, the injection module 112 is configured to introduce the resin 136 in a liquid state or in liquid form into the channel 152 of the conduit 128, while simultaneously introducing the fiber bundle 140. In some embodiments, the injection module 112 is configured to insert the fiber bundle 140 and the resin 136 sequentially at different times or stages, such as, *e.g.,* introducing the fiber bundle 140 before introducing the resin 136, or introducing the resin 136 before the fiber bundle 140.

With continued reference to FIG. 1, the injection module 112 is configured to use a pressurized fluid, such as, *e.g.,* a gas, a liquid, a slurry, or a combination thereof, to exert a pushing force and/or a pulling force on the resin 136 and fiber bundles 140. For example, the pressurized fluid can be the resin 136 in a liquid state, or the pressurized fluid can be gas, such as air or an inert gas, such as nitrogen. Accordingly, the injection module 112 can be couped to both the first and second ends 144, 148 of the conduit 128 to apply a pressure differential across the conduit 128, where a negative pressure or vacuum is applied to the outlet end and a positive pressure is applied to the inlet end. In some embodiments, the injection module 112 applied only a positive pressure to the inlet end, or a negative pressure to the outlet end. In some embodiments, the injection module 112 uses a mechanical force, such as, *e.g.,* a clamp, a plunger, a tether, a hook, a screw conveyor or augur, a roller, or a pulley system, or combinations thereof, to pull or push the reinforcement material 132 through the channel 152 of the conduit 128. To aid in this operation, the injection module 112 may be configured to receive a feedback signal 156 for sensing, measuring, detecting, and/or determining various parameters associated with the introduction of the reinforcement material 132 into the conduit 128. For instances, the feedback signal 156 can relate to a distance, pressure, temperature, mass, volume, conductivity, friction, or the like.

As described above, the injection module 112 is configured to introduce the fiber bundle 140 or pluralities thereof, which may include continuous fiber bundles or filaments comprising at least one of a carbon fiber, an aramid fiber, a glass fiber, or a metal or metal alloy filament, among others. Advantageously, the fiber bundle 140 of the reinforcement material 132 is configured to provide rigidity, stability, and strength, such that the reinforcement material 132 reinforces, stabilizes, or strengthens the component 108 in select portions, regions, and directions. In some embodiments, the fiber bundle 140 comprises at least one optical fiber to enable the transmission of light and/or signals throughout the conduit 128 of the component 108. In some instances, the optical fiber can form part of a mechanical stress or deformation sensor, or for monitoring other mechanical properties of the component 108. The fiber bundle 140 may include organic materials, such as flex, hemp, or bamboo fibers. The fiber bundle 140 may comprise copper, steel, or other metallic materials for providing the component with thermal or electrical conductivity. The fiber bundle 140 can comprise fibers that are braided or unbraided, wound or unwound, or entangled or parallel. The fiber bundle 140 can comprise fibers having a diameter between about 5 microns and about 25 microns, and there may be 500 or more fibers included in the fiber bundle 140. Where the fiber bundle 140 includes continuous fibers or filaments, the fiber bundle 140 can extend continuously through the channel 152 of the conduit 128 from the first end 144 to the second end 148.

Still referring to FIG. 1, the injection module 112 may introduce the resin 136 that is a thermostable resin or thermoplastic resin. For example, the thermoplastic resin may be a material that, at ambient temperature, is in a solid state and melts above a threshold temperature, such as, *e.g.*, polypropylene (PP), polyamide (PA), polyethylene (PE), styrene butadiene acrylonitrile (SBA) or polyactic acid (PLA). Thermostable resins are in a liquid state at ambient temperature and solidify during a curing process, such as, *e.g.,* epoxy, polyester, vinylester or phenolic. In comparison with thermoplastic resins, the thermostable resins degrade or burn above certain temperatures and have lower viscosities than thermoplastic resins to promote improved impregnation of the fibers and facilitates the introduction of the fibers combined with the resin within the conduit 128. In some implementations, the resin 136 advantageously contributes to introducing the fiber bundle 140 in the channel 152 of the conduit 128, and, when cured and solidified, the resin 136 acts as a bond interface between the fiber bundles 140 and the component 108. The manufacturing module 104 may form the component 108 and the conduits 128 from the same type of photosensitive resin that is used within the reinforcement material 132 to allow curing to occur by exposure to various forms of light. In some instances, the resin 136 used within the reinforcement material 132 shares properties with a material used to form the component 108 or conduit 128. In some embodiments, the resin 136 differs from the material of the component 108 or conduit 128 with regard to curing properties. For example, the resin 136 may be a material that is temperature-cured and the component 108 or conduit 128 may be a material that is light-cured. Further, the material of the component 108 or conduit 128 may have a different appearance, *e.g.*, a color, texture, grain, etc. from the material resin 136, which can provide a visual differentiation between them.

With continued reference to FIG. 1, injection module 112 is configured to selectively fill the channel 152 of the conduit 128 with the reinforcement material 132. In some embodiments, the channel 152 is only partially filled with the reinforcement material 132. This may be advantageous when, for example, the conduit 128 is configured to be at least partially trimmed or removed relative to the component 108. For example, a portion of the first end 144 and/or second end 148 may include a volume where no reinforcement material is provided to facilitate removal of such portion via the finishing module 120. In some embodiments, the channel 152 is entirely filled with the reinforcement material 132. By varying the proportions of resin 136 and fiber bundles 140 composing the reinforcement material 132, functions and properties of the reinforcement material 132 can be selectively tuned or varied for exhibiting certain desired properties within the component 108. For example, increasing the proportion of fiber bundles 140 can yield an increase in stiffness or strength, while increasing a proportion of resin 136 can reduce mass or improve adhesion within the conduit 128.

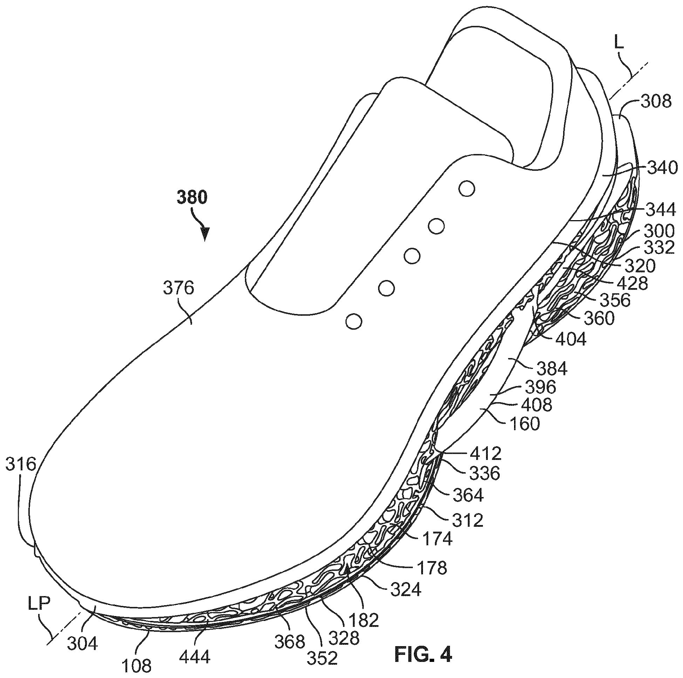

The curing module 116 is configured to cure the composite reinforcement material 132 including the resin 136 introduced within the conduit 128 by the injection module 112. To that end, the curing module 116 may applying heat, light, electromagnetic waves, or combinations thereof. In some applications, the curing module 116 may include the application of tension or compression so that, after curing, the reinforcement material 132 and component 108 will be pre-tensed or pre-loaded to impart desired behaviors or performance properties to the component 108. After the reinforcement material 132 is cured within the component 108, the conduits 128 and cured reinforcement material 132 therein are referred to as reinforcements or reinforcement members 160 (see, *e.g.,* FIG. 4). It will be appreciated that aspects of the conduits 128 disclosed herein are also applicable to the reinforcement members 160 resulting from or associated with those conduits 128. For example, aspects related to the position, shape, size, relative dimensions, and functions, among other aspects, of the conduits described throughout the disclosure are applicable to the reinforcement members formed from those conduits using the systems and methods described herein.

As described above, the finishing module 120 is configured to perform post-processing or finishing applications to the component 108. The finishing module 120 may include a tool that is configured to trim, cut, grind, polish, etch, perforate, or engrave the component 108.

For example, the finishing module 120 can be a trimming tool for removing a portion of the conduits 128, such as, e.g., trimming the first end 144 or the second end 148.

In some embodiments, one or more conduits 128 of the component 108 are selected to function as part of a cooling circuit through which a cooling fluid (not shown), such as, *e.g.,* water, glycol, refrigerant, ammonia, air, or any suitable medium may be passed through for transferring heat out of the component 108, which may occur in connection with the injection module 112, curing module 116, or finishing module 120. Accordingly, such conduits 128 selected for use with a cooling circuit are configured to remain empty, so that no composite mixture containing the resin and continuous fiber bundles is introduced by the injection module 112.

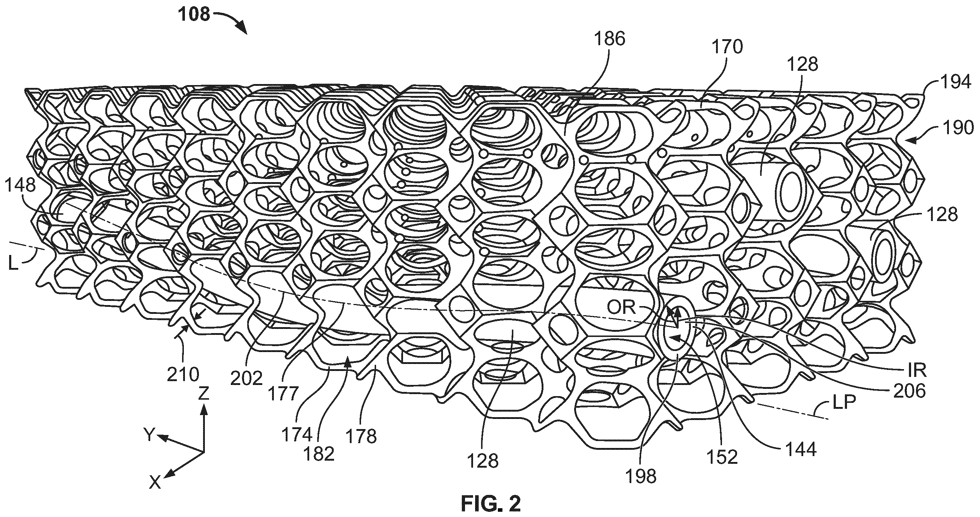

FIG. 2 depicts an embodiment of the component 108, which may be a portion of a sole structure for an article of footwear. In the illustrated embodiment, the component 108 comprises a support structure or lattice structure 170 that is formed of a plurality of beams 174 that are interconnected at a plurality of nodes 178 and define a plurality of voids 182 between and/or among the plurality of beams 174 and the plurality of nodes 178. The plurality of beams 174 may be referred to herein as a beams, segments, ribs, or struts. The plurality of nodes 178 may be referred to herein as nodes, intersections, or junctions. The plurality of voids 182 may be referred to herein as voids, openings, or empty space. In the illustrated embodiment, the beams 174 vary in beam length, beam thickness, and beam shape from one another. In some embodiments, the beams 174 extend linearly between nodes 178. In some embodiments, the beams 174 extends curvilinearly, or circuitously, or non-linearly between nodes 178. In some embodiments, the beams 174 non-hollow, solid structures. In some embodiments, the beams 174 are formed as hollow, tubular structures. In some embodiments, regions or portions of the lattice structure 170 are warped, twisted, curved, stretched, distorted, or condensed, such that the lattice structure 170 varies in density among portions or regions thereof.

The lattice structure 170 may be divided into a plurality of unit cells 186 that form a repeated pattern, such that the lattice structure 170 is defined by the repetition of the plurality of unit cells 186 in different directions. The lattice structure 170 may have unit cells 186 described as triangular, cubic, pyramidal, ovular, polygonal, or irregular, among other formations. The unit cells 186 can be at least one of simple cubic, body centered cubic, face centered cubic, column, columns, diamond, fluorite, octet, truncated cube, truncated octahedron, kelvin cell, IsoTruss, re-entrant, weaire-phelan, triangular honeycomb, triangular honeycomb rotated, hexagonal honeycomb, re-entrant honeycomb, square honeycomb rotated, square honeycomb, face centered cubic foam, body centered cubic foam, simple cubic foam, hex prism diamond, hex prism vertex centroid, hex prism edge, hex prism laves phase, hex prism central axis edge, tet oct vertex centroid, oct vertex centroid, or dodecahedron. The lattice structure 170 may be formed by a differential geometry structure. For example, the lattice structure 170 may be formed by a gyroid pattern that includes a plurality of interconnected, periodic minimal surfaces. The gyroid pattern may define the plurality of unit cells 186 repeated in a pattern over a desired volume. In general, the use of a differential geometry structure (*e.g.*, a gyroid pattern) may reduce stress concentrations formed along the lattice structure 170 due to the reduction in sharp edges formed on the lattice structure. In some embodiments, the lattice structure 170 is formed without any sharp edges, such that each corner, interface, edge, and intersection has a radius of curvature. In some embodiments, the lattice structure 170 is comprised of non-ordered beams, such that the beams 174 do not form repeated patterns in different directions and, instead, are unique relative to one another, which may give the lattice structure 170 an organic, animate, or natural appearance. Further, the lattice structure 170 may be classified or described in terms of the functionality or performance characteristics, such as, *e.g.*, auxetic, rubbery, isotropic, or anisotropic, among others.

The lattice structure 170 can be referred to herein as a lattice array, a structural array, a gridwork, a framework, a skeleton, or a scaffold. The lattice structure 170 occupies a support region or lattice region 190 that has a total lattice volume that is bounded by a surface that is defined by the perimeter-most points 194 of the lattice structure 170, such that the total lattice volume encompasses and includes the voids 182 of the lattice structure 170. In other words, the lattice region 190 covers, occupies, or spreads across the total lattice volume. The filled volume is occupied by a lattice mass, which includes the beams 174 and the nodes 178 but excludes the voids 182. The filled volume may be about 5% to about 90% of the total lattice volume. In some embodiments, the filled volume may be 20% to 80%, 30% to 70%, 40% to 60%, 5% to 20%, 5% to 30%, 5% to 40%, 5% to 50%, or 45% to 75% of the total lattice volume. In some embodiments, the lattice structure 170 defines an effective density that is defined as the lattice mass divided by the total lattice volume, and the effective density varies across the lattice structure 170. In some embodiments, the lattice structure 170 is printed with the conduits 128 using a 3D printer, so that the conduits 128 can be included as part of the lattice mass and, thus, as part of the effective density. The effective density, which may be measured in grams per cubic centimeter (g/cm3), can range inclusively between 0 g/cm3 and 2.00 g/cm3. In some embodiments, the effective density can be between 0.001 g/cm3 and 1.99 g/cm3, or between 0.05 g/cm3 and 1.95 g/cm3, or between 0.10 g/cm3 and 1.90 g/cm3, 0.50 g/cm3 and 1.50 g/cm3, or between 0.75 g/cm3 and 1.25 g/cm3, or between 1.00 g/cm3 and 1.15 g/cm3.

With reference to FIG. 2, the component 108 includes three conduits 128 that are spaced apart from one another and extending across the component 108 through the lattice structure 170. Accordingly, the lattice structure 170 may be connected to the conduit 128 at various locations or interfaces therealong. In some embodiments, at least one of the beams 174, at least one of the nodes 178, or both terminate or connect to the conduit 128 at the first end 144 and/or second end 148, or at locations between the first end 144 and the second end 148. Each conduit 128 includes the channel 152 that extends from the first end 144 to the second end 148. In the illustrated embodiment, the channel 152 is depicted as having a circular or round cross-sectional shape, although other configurations are contemplated. In some embodiments, the channel 152 has a cross-sectional shape selected from the group consisting of ovular, polygonal, circular, or non-polygonal. For purposes of clarity, examples of polygonal shapes include a square, a rectangle, a pentagon, a hexagon, an octagon, and a decagon. In the illustrated embodiment, the first end 144 is depicted as having an edge 198 that is planar or flat. However, in other embodiments, the edge 198 may be non-planar, such as, *e.g.,* angled, beveled, chamfered, rounded, notched, or castellated.

In some embodiments, the conduits 128 are formed integrally with the component 108 through the manufacturing module 104 via an additive manufacturing system or method, such that the lattice structure 170 and the conduits 128 are printed as a unitary structure. In some embodiments, the conduits 128 are inserted within a mold and the component 108 is formed by a molding process, *e.g.*, injection molding, compression molding, co-molding, or the like, around each of the conduits 128.

In some embodiments, the conduits 128 are inserted into and/or through the lattice structure 170 during or after formation of the lattice structure 170, such as along pre-formed pathways or receptacles that are configured to receive the conduits 128. Accordingly, the conduits 128 may be considered structures that are separate or distinct from the lattice structure 170 of the component 108. In some embodiments, the conduits 128 and the component 108 may be formed of the same material as one another. In some embodiments, the conduits 128 and the component 108 are formed of different materials from one another. In some embodiments, the component 108 and the conduit 128 are made of materials that differ with respect to at least one material characteristic, *e.g.*, density, hardness, tensile strength, melting point, from one another. The reinforcement material 132 has a greater stiffness, rigidity, density, or hardness, or combinations thereof, than a corresponding property of the material used to form the component 108 or the conduit 128. Preferably, the component is formed of an elastic or elastomeric material and the reinforcement material 132 provides stiffness, rigidity, and/or density to the component 108. In some embodiments, the component 108 is made of a polymer material, such as, *e.g.,* a thermoplastic polyamide elastomer (TPA) or a thermoplastic polyurethane (TPU). Such materials may be provided in the form of powder to the additive manufacturing system. Preferably, the reinforcement material 132 has a greater density than a density of the material used to form the component 108, including the conduit 128 and the lattice structure 170.

In some embodiments, the reinforcement material 132 has a reinforcement density of between about 0.50 g/cm3 and about 3.00 g/cm3, or between about 0.75 g/cm3 and about 2.75 g/cm3, or between about 1.00 g/cm3 and about 2.50 g/cm3, or between about 1.25 g/cm3 and about 2.25 g/cm3. In some embodiments, the reinforcement material 132 has a reinforcement density of about 1.45 g/cm3. In some embodiments, the reinforcement material 132 has a reinforcement density that is greater than 3.00 g/cm3. In some embodiments, the material of the component 108 has a component material density of between about 0.25 g/cm3 and about 2.50 g/cm3, or between about 0.50 g/cm3 and about 2.00 g/cm3, or between about 0.75 g/cm3 and about 1.50 g/cm3, or between about 1.00 g/cm3 and about 1.25 g/cm3. In some embodiments, the component material density is about 1.01 g/cm3. In some embodiments, the component material density is about 1.10 g/cm3. In some embodiments, the component material density is less than 0.25 g/cm3.

Accordingly, the reinforcement density is selectively provided to be greater than the component material density to provide reinforcement to the component 108. In some embodiments, a ratio between the minimum component density and the maximum reinforcement density is about 12:1. In some embodiments, a ratio between the maximum component density and the minimum reinforcement density is about 1.2:1. It will be appreciated that the ratio between the component material density and the reinforcement density can vary between minimum and maximum values, such as, *e.g.*, between about 12:1 and about 1.2:1. In some embodiments, the ratio between the component material density and the reinforcement density is about 1.43:1 or, put another way, the reinforcement density is about 43.56% greater than the component material density. In some embodiments, the ratio between the component material density and the reinforcement density is about 1.31:1 or, put another way, the reinforcement density is about 31.81% greater than the component material density.

For purposes of clarity, directional coordinates X, Y, and Z will be referenced in this disclosure. In particular, the X direction corresponds to the lateral-to-medial direction that is orthogonal to a longitudinal direction in which the longitudinal axis L extends, the Y direction corresponds to the longitudinal direction that is parallel with the longitudinal axis L, and the Z direction corresponds to a vertical direction that is orthogonal to the X and Y directions. Further, the term "in-plane" will be used herein to refer to a 2-dimensional plane that extends in the X direction and the Y direction, to which the Z direction is orthogonal.

Additionally, it will be understood that the longitudinal axis L also defines a longitudinal plane LP extending vertically in the Z direction.

As illustrated in FIG. 2, the conduits 128 extend within the component 108 in multiple directions, *e.g.*, by curving downward in the negative Z direction and extending axially in the positive X direction. Each conduit 128 defines a central axis 202 that extends from the first end 144 to the second end 148, which is representatively shown on only one of the conduits 128. The conduit 128 defines a length LL1 that is measured along the central axis 202 from the first end 144 to the second end 148. As illustrated in FIG. 2, the component 108 includes multiple conduits 128, and the conduits 128 may vary in length LL1 relative to one another. In the illustrated embodiment, the conduit 128 has a conduit wall 206 that defines an outer radius OR and an inner radius IR relative to the central axis 202. The outer radius OR and/or the inner radius IR may vary along the conduit 128 between the first end 144 and the second end 148. In some embodiments, the inner radius IR and the outer radius OR are constant along the conduit 128 between the first end 144 and the second end 148. As illustrated in FIG. 2, the component 108 includes multiple conduits 128, and the conduits 128 may vary in outer radius OR or inner radius IR relative to one another. It is understood that the outer radius OR and inner radius IR are mathematically related to an outer diameter OD and an inner diameter ID, respectively, by known equations, such that it is within the scope of the disclosure for the conduit 128 to have the corresponding outer diameter OD and inner diameter ID.

As referenced herein, a thickness of each conduit 128 may be defined with respect to the outer diameter OD or an equivalent thereof. In some embodiments, the conduit 128 may define the central axis 202 and have a non-circular cross-sectional shape, such that the conduit 128 has an equivalent diameter that is referred to as the thickness of the conduit 128. Similarly, a thickness of the channel 152 of each conduit 128 corresponds to the inner diameter ID or equivalent thereof. The thickness of the channel 152, the thickness of the conduit 128, or both may be constant or variable across the length LL1 of each conduit 128. For example, the channel 152 of the conduit 128 may taper or narrow from the first end 144 to the second end 148. Additionally, the thickness of the channel 152, the thickness of the conduit 128, or both may vary among the conduits 128, such that one is larger or smaller than another. It will be appreciated that a wall thickness of the conduit wall 206 can be represented by the difference between the OR and the IR. Accordingly, the wall thickness of the conduit wall 206 may vary along the conduit 128 between the first end 144 and the second end 148. As illustrated in FIG. 2, the component 108 includes multiple conduits 128 that have approximately uniform or constant wall thickness relative to one another. In some embodiments, the conduits 128 may vary in wall thickness relative to one another.

In some embodiments, the wall thickness of the conduit wall 206 may be greater than a maximum beam thickness or a minimum beam thickness of the beams 174 of the lattice structure 170. In some embodiments, the wall thickness of the conduits 128 can be smaller than a maximum beam thickness or a minimum beam thickness 210 of the beams 174. In some embodiments, the wall thickness of the conduit wall 206 can be proportional to the maximum or minimum beam thickness of the beams 174 of the lattice structure 170. For example, a ratio between the wall thickness of the conduit wall 206 and the maximum or minimum beam thickness of the beams 174 can be about 1:1, or about 2:1, or about 1:2, or about 3:1, or about 1:3, or between about 5:1 to about 1:5. In the illustrated embodiment, the OR of the conduit 128 is greater than the maximum beam thickness 210 defined by the beams 174 of the lattice structure 170. In some embodiments, the OR of the conduit 128 is about equal to the maximum beam thickness 210 of the beams 174. In some embodiments, the OR of the conduit 128 is smaller than the maximum beam thickness of the beams 174.

As described above, the component 108 is designed to have reinforcements arranged for imparting strength properties, *e.g.*, stiffness or resistance, to particular regions or in particular directions. Accordingly, the conduit 128 may define the central axis 202 to curve in one or more directions along the conduit 128 between the first end 144 and the second end 148. In some embodiments, the conduit 128 is linear, straight, and not curved between the first and second ends 144, 148 and, thus, the central axis 202 is also linear, straight, and not curved. In some instances, the conduit 128 can form a corner (not shown) defining an angle, such as, *e.g.,* a right angle, an acute angle, or an obtuse angle, and the central axis 202 has a corresponding angle. Accordingly, the central axis 202 conforms to and is defined by the extension of the conduit 128. The central axis 202 is arranged centrally within the channel 152 of the conduit 128 and intersects the first end 14 and the second end 148. In some embodiments, the channel 152 of the conduit 128 is uninterrupted and empty, such that the central axis 202 does not intersect any portion of the conduit 128 or the component 108, including the lattice structure 170. In some embodiments, the channel 152 of the conduit 128 is interrupted by a portion of component 108, such as the lattice structure 170 or the conduit wall 206, such that the central axis 202 may intersect that portion of the component 108. In some embodiments, a portion of the component 108, such as the lattice structure 170 or the conduit wall 206, intersects or intrudes into the channel 152 without intersecting the central axis 202. For example, the conduit 128 may have ridges, bumps, nodes, undulations, threads, valves, or other members (not shown) disposed within a portion of the channel 152 along the conduit wall 206, which may or may not be intersected by the central axis 202.

As used herein, the term "stiffness" refers to the way in which a component resists deformation when a load is applied. In particular, "stiffness" will be discussed herein with respect to elastic deformation, *i.e.*, temporary deformation that is considered non-destructive. Therefore, "stiffness" may be used in harmony with the terms "resistance" and "strength." Further, "stiffness" may be described herein with respect to various directions, types of deformation, material properties, and the like. For example, the "stiffness" of a component may be broken down into flexural stiffness, tensile stiffness, or shear stiffness. Further, the "stiffness" of a component is correlated to the modulus of elasticity (E) of the materials used, where modulus of elasticity can be quantified by the

$$E = \frac{\sigma}{\varepsilon}$$

Young's modulus formula                , where σ is uniaxial stress, *i.e.,* force per unit surface, and ε is strain, *i.e.,* proportion deformation. For purposes of clarity, "stiffness" may be further specified herein to refer to particular types of resistance, such as bending resistance BR and torsional resistance TR. In some instances, the "stiffness" of a component may be quantified or calculated with respect to a dimension, a mass, or a volume. For example, the "stiffness" of a component may be measured in units of Newtons per millimeter (N/mm), or in units of gigapascals (GPa), although other units may be used. Further, "stiffness" may be referenced qualitatively as being high or low, while also being understood in relation to various aspects of footwear, such as comfort, support, stability, rigidity, and durability, among others.

In general, components constructed of composite fiber materials, such as, *e.g.*, continuous fiber bundles and resin, have improved strength-to-weight ratios in comparison to sole structures made entirely of polymer materials or metals, or without fibers. Composite fiber materials are often strongest in tension, which is limited to particular directions, *i.e.,* the axial direction in which the composite fiber material is in tension. Accordingly, composite materials having fiber materials arranged in a single, uniaxial direction are strongest in that direction, but exhibit different, *e.g.*, weaker, properties in other directions. As such, the composite material is considered to have anisotropic properties, *i.e.,* exhibiting different sets of strength properties in different directions. The anisotropic properties include at least one of a bending resistance, a torsional resistance, a tensile stiffness, and compressive stiffness. The anisotropic properties can vary from one reinforcement to another. The component 108 can be variably reinforced to have anisotropic properties with lateral and medial reinforcements, or vertical and horizontal reinforcements, or curved and straight reinforcements, or combinations thereof. In some embodiments, regions of the component having the reinforcements 160 exhibit quasi-isotropic properties. In addition to the reinforcements 160, the lattice structure 170 of the component 108 can also be configured to impart anisotropic, quasi-isotropic, or isotropic properties to the component 108.

It will be appreciated that the stiffness of the component 108 and/or its reinforcements 160 can be understood in terms of bending resistance BR and torsional resistance TR. Bending resistance BR is the mathematical relationship between a transverse force and deflection, and bending resistance BR may be referred to herein as a spring rate or stiffness. Similarly, torsional resistance TR is the mathematical relationship between a twisting force and deflection, and torsional resistance TR may be referred to as a rotational stiffness. It is well-known that the bending resistance BR and torsional resistance TR are proportional to the elastic modulus of a material or composition of materials. Further, the geometry and dimensions are also proportional to the bending resistance BR and torsional resistance TR, depending on the direction and location of the applied load. For example, dimensions that are defined in a parallel direction with the direction of the applied load have a greater impact on the particular resistance, *e.g.*, where bending load is applied in the Z direction and thickness is defined in the Z direction.

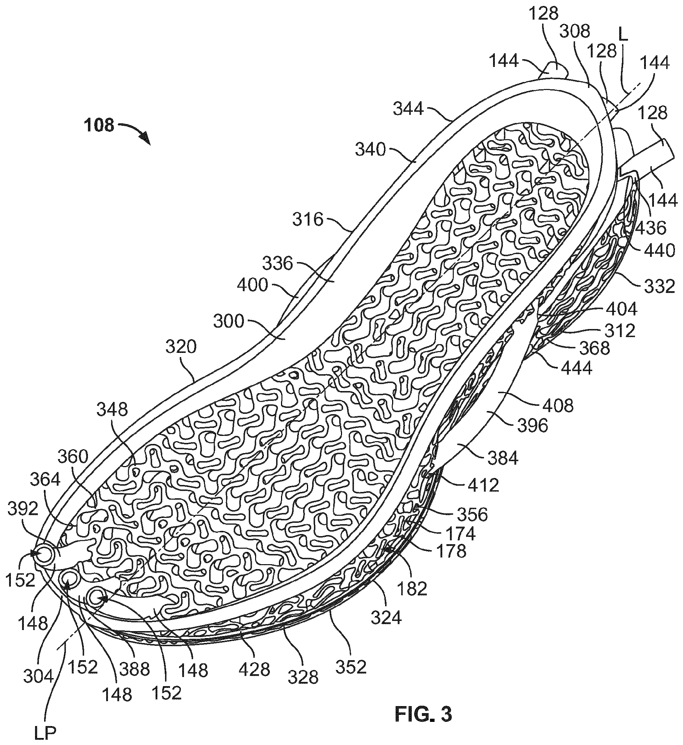

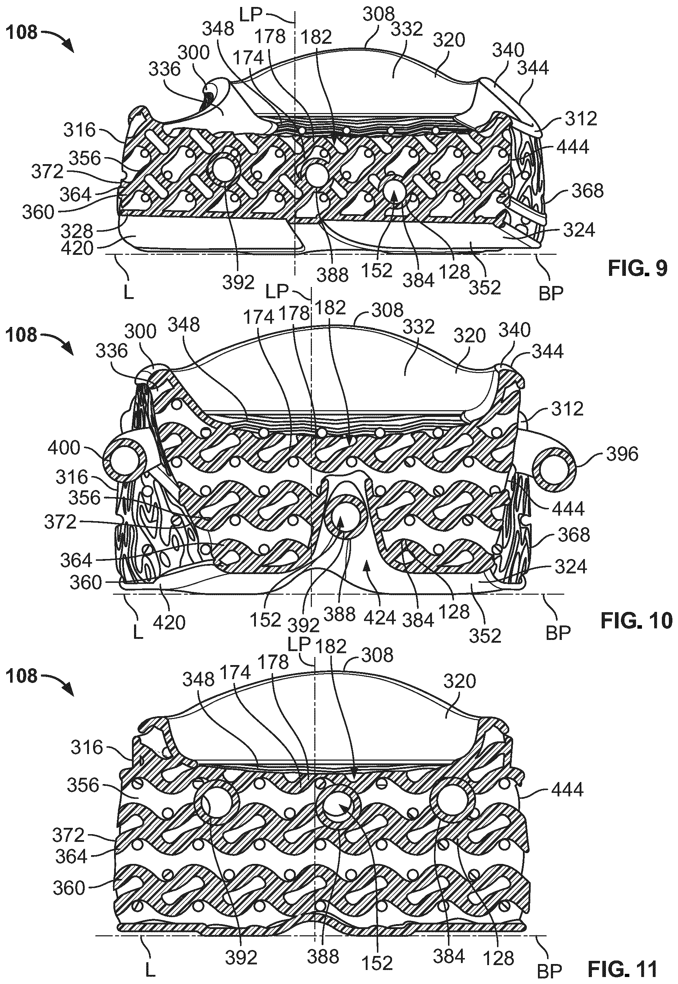

FIGS. 3-11 depict an embodiment of the component 108 in the form of a sole structure 300 that is configured to be used with the systems and methods disclosed herein. With reference to FIG. 3, the sole structure 300 has a toe end 304 that is opposite a heel end 308, a lateral side 312 that is opposite a medial side 316, and a top side 320 that is opposite a bottom side 324. The sole structure 300 includes a forefoot region 328 that is proximate to and includes the toe end 304, a heel region 332 that is proximate to and includes the heel end 308, and a midfoot region 336 that is disposed between the forefoot region 328 and the heel region 332. The sole structure 300 further includes an upper rim 340 that extends along a periphery 344 at the top side 320 of the sole structure 300 and at least partially surrounds a top surface 348 of the sole structure 300. Further, the sole structure 300 has a bottom surface 352 that is opposite the top surface 348 and arranged on the bottom side 324. In the illustrated embodiment, the upper rim 340 extends continuously along the lateral side 312 and the medial side 316 from the forefoot region 328, through the midfoot region 336, and to the heel region 332 to wrap around the heel end 308, such that the upper rim 340 at least partially circumscribes the top surface 348. With reference to FIGS. 3 and 4, the top surface 348 of the sole structure 300 is configured to face an upper 376 when assembled to the sole structure 300.

Further, the sole structure 300 includes a midsole 356 that extends between the top side 320 and the bottom side 324. The midsole 356 may be constructed from a thermoplastic material, such as polyurethane (PU), for example, and/or an ethylene-vinyl acetate (EVA), copolymers thereof, or a similar type of material. In other embodiments, the midsole 356 may be an EVA-Solid-Sponge ("ESS") material, an EVA foam (*e.g.,* PUMA® ProFoam Lite™, IGNITE Foam), polyurethane, polyether, an olefin block copolymer, organosheets, a thermoplastic material (*e.g.*, a thermoplastic polyurethane, a thermoplastic elastomer, a thermoplastic polyolefin, etc.), or a supercritical foam. The midsole 356 may be a single polymeric material or may be a blend of materials, such as an EVA copolymer, a thermoplastic polyurethane, a polyether block amide (PEBA) copolymer, and/or an olefin block copolymer. One example of a PEBA material is PEBAX®. In some embodiments, the midsole 356 is manufactured by a process involving injection molding, compression molding, expansion molding, printing layer by layer, *i.e.,* additive manufacturing systems or methods, and the like.

In the illustrated embodiment of FIGS. 3-11, the midsole comprises a support region or lattice region 360 having a support structure or lattice structure 364 and conduits 128 extending therein. The lattice structure 364 is similar to the lattice structure 170 that is depicted in FIG. 2, in that the lattice structure 364 includes the plurality of beams 174 interconnected by the plurality of nodes 178 and forming the plurality of voids 182. The lattice structure 364 of FIGS. 3-11 is depicted as a gyroid pattern, although other configurations are contemplated. As described above in connection with FIG. 2, the lattice structure 364 may vary in effective density across the lattice region 360 comprising the midsole 356 of the sole structure 300. In the illustrated embodiments, the effective density of the lattice structure 364 may increase at, along, or proximate the conduits 128, the toe end 304, the heel end 308, the bottom side 324, and the upper rim 340. This increase in effective density can be due to the interfaces or contact between the beams 174 and surrounding portions of the sole structure 300, including the conduits 128, the toe end 304, the heel end 308, the bottom side 324, and the upper rim 340. Accordingly, the lattice structure 364 is configured to support such regions and portions of the midsole 356 and sole structure 300. Additionally, the lattice structure 364 can decrease in effective density moving away from or in region spaced from such portions of the sole structure 300, which can reduce a total mass of the sole structure 300 and provide greater flexibility.

The sole structure 300 defines a lateral sidewall 368 that extends along the lateral side 312 from the toe end 304 to the heel end 308, and a medial sidewall 372 that extends along the medial side 316 from the toe end 304 to the heel end 308. The lattice region 360 of the midsole 356 is contiguous and coextensive with the medial sidewall 372 along the medial side 316 and the lateral sidewall 368 along the lateral side. Accordingly, the lattice structure 364 of the midsole 356 at least partially defines the medial sidewall 372 and the lateral sidewall 368 and, thus, is exposed and visible along the lateral side 312 and the medial side 316 from an exterior view of the sole structure 300.

In comparison, FIGS. 3 depicts the sole structure 300 in a pre-processed configuration and FIG. 4 depicts the sole structure 300 in a finished configuration after being assembled with the upper 376 to form an article of footwear 380. The pre-processed configuration of FIG. 3 refers to a version of the sole structure 300 prior to being treated by or engaged with the injection module 112, such that the conduits 128 are hollow and empty. Accordingly, FIG. 3 depicts the first and second ends 144, 148 of the conduits 128 as extending or protruding outwardly from the sole structure 300. In particular, the first end 144 of each conduit 128 extends outboard or outwardly from the heel end 308 of the sole structure 300 and the second end 148 of each conduit 128 extends outboard or outwardly from the top surface 348 of the sole structure 300 at a location adjacent the toe end 304. Accordingly, the conduits 128 extend through the heel region 332, the midfoot region 336, and the forefoot region 328.

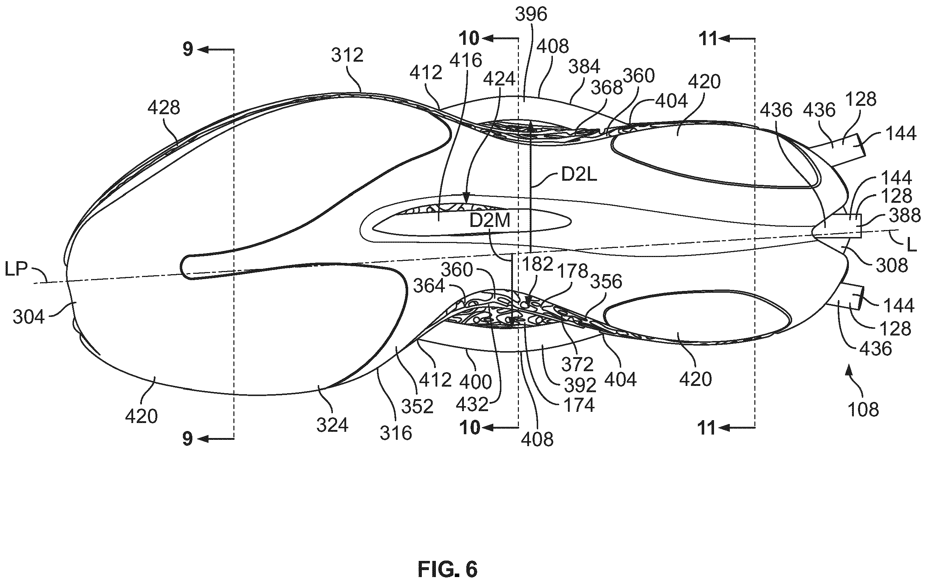

With continued reference to FIGS. 3-11, the conduits 128 comprise a set of three conduits including a lateral conduit 384, a central conduit 388, and a medial conduit 392. The central conduit 388 is disposed between the medial conduit 392 and the lateral conduit 384. The lateral conduit 384 extends continuously from the first end 144 to the second end 148 and defines a lateral midsegment 396 that protrudes outboard or outwardly of the lateral sidewall 368 of the sole structure 300 within the midfoot region 336. Similarly, the medial conduit 392 extends continuously from the first end 144 to the second end 148 and defines a medial midsegment 400 that protrudes outboard or outwardly of the medial sidewall 372 of the sole structure 300 within the midfoot region 336. The medial midsegment 400 and the lateral midsegment 396 are curved, arched or bowed relative to the respective medial sidewall 372 and the lateral sidewall 368. Put another way, and with reference to FIG. 6, the medial midsegment 400 and the lateral midsegment 396 are curved, arched, or bowed relative to the longitudinal axis L that defines the longitudinal plane LP (*i.e.*, extending in a top-bottom direction or the Z direction) that bisects the toe end 304 and the heel end 308 of the sole structure 300. The lateral midsegment 396 and the medial midsegment 400 may be understood as defining a concave or convex curvature relative to the longitudinal plane LP. For example, an inwardly facing surface of the lateral midsegment 396 has a concave curvature relative the longitudinal plane LP, while an outwardly facing surface of the lateral midsegment 396 has a convex curvature relative to the longitudinal plane LP. Similarly, an inwardly facing surface of the medial midsegment 400 has a concave curvature relative the longitudinal plane LP, while an outwardly facing surface of the medial midsegment 400 has a convex curvature relative to the longitudinal plane LP.

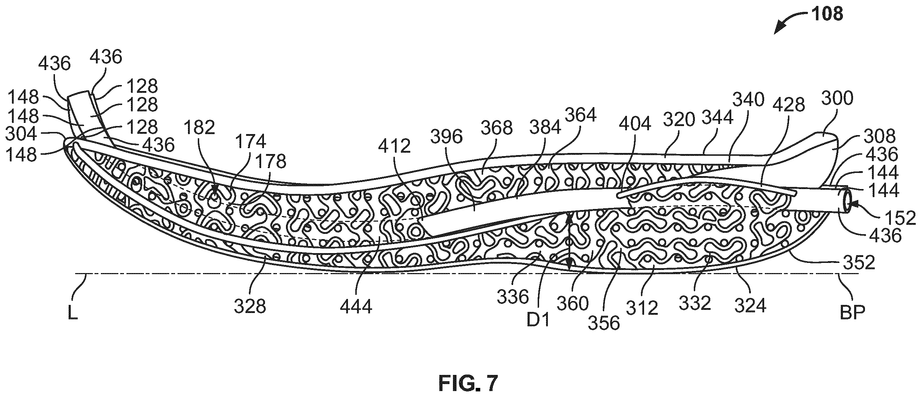

The conduits 128 extend through the lattice region 360 of the sole structure 300 and, thus, the conduits 128 extend through the midsole 356 of the sole structure 300 from the heel end 308 toward the toe end 304. The conduits 128 are disposed between the top side 320 and the bottom side 324 of the sole structure 300 in the heel region 332, the midfoot region 336, and the forefoot region 328 until the second ends 148 of the conduits 128 curve upwardly through the top side 320 and protrude from the top surface 348 adjacent the toe end 304. As a result, the conduits 128 are disposed at a distance D1 from a bottom plane BP that extends orthogonal to the longitudinal plane LP (see FIG. 6) and tangent to the bottom side 324 of the sole structure 300, and the distance D1 varies from the first end 144 to the second end 148 of each of the lateral conduit 384, the central conduit 388, and the medial conduit 392. With reference to the lateral side view of FIG. 7, the first end 144 of the lateral conduit 384 is disposed closer to the bottom plane BP than the second end 148, such that the distance D1 at the first end 144 is shorter or smaller than the distance D1 at the second end 148. As well, the distance D1 varies along the lateral midsegment 396 and, in particular, the distance D1 along the lateral midsegment 396 decreases moving toeward (*i.e.*, in a direction toward the toe end).

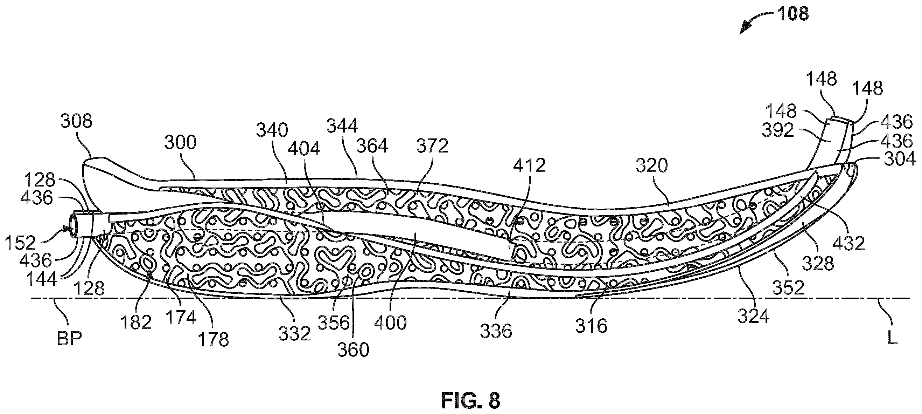

With reference to the medial side view of FIG. 8, the first end 144 of the medial conduit 392 is disposed closer to the bottom plane BP than the second end 148, such that the distance D1 at the first end 144 is shorter or smaller than the distance D1 at the second end 148. As well, the distance D1 varies along the medial midsegment 400 and, in particular, the distance D1 along the medial midsegment 400 decreases moving toeward (*i.e.*, in a direction toward the toe end). Accordingly, the lateral conduit 384, the central conduit 388, and the medial conduit 392 extend a full length of the sole structure 300 and substantially conform to the contours of a user's foot. Accordingly, the length LL1 of each of the conduits 384, 388, 392 may be between about 70% and about 130% of a total length of the sole structure 300 between the heel end 308 and the toe end 304. In the illustrated embodiment, the lateral conduit 384 and the medial conduit 392 curve downwardly toward the bottom side 324 from the midfoot region 336 to toward an area that corresponds to a metatarsophalangeal (MTP) area of a user's foot before curving upwardly toward the toe end 304. As such, the resulting reinforcement members 160 formed from the lateral conduit 384, central conduit 388, and the medial conduit 392 can support a user's foot in ways that provide stability, energy return, propulsion, dampening or cushioning, and comfort. This is, in part, due to the bending resistance BR offered by all three of the lateral conduit 384, medial conduit 392, and central conduit 388 relative to a load applied in the Z direction, *e. g.*, as the user walks or runs through a gait cycle or performs jumping maneuvers. Further, torsional resistance TR is afforded by the arrangement of the lateral conduit 384, the medial conduit 392, and the central conduit 388 within the sole structure 300 and interconnected to one another by the lattice structure 364. The lateral conduit 384, the medial conduit 392, and the central conduit 388 are spaced apart from one another in the later-medial direction, i.e., along the X axis, which reinforces the sole structure 300 against twisting or rotational loads applied in the Z direction and at a location offset laterally or medially of the longitudinal plane LP, *e.g.,* as the user walks or runs through the gait cycle or performs a cut maneuver in a different direction.

With reference to the bottom view of FIG. 6, the lateral conduit 384 is disposed laterally (i.e., toward the lateral side) of the longitudinal plane LP and the medial conduit 392 is disposed medially (*i.e.*, toward the medial side of the longitudinal plane LP. Accordingly, the lateral conduit 384 and the medial conduit 392 are disposed on opposing sides from one another relative to the longitudinal plane LP. The lateral conduit 384 is disposed entirely on the lateral side 312 of the longitudinal plane LP. The medial conduit 392 is disposed entirely on the medial side 316 of the longitudinal plane LP. Illustratively, the lateral conduit 384 is located a distance D2L from the longitudinal plane LP and the medial conduit 392 is located a distance D2M from the longitudinal plane LP. To provide a desired torsional resistance TR, the distance D2L varies between the first end 144 and the second end 148 of the lateral conduit 384. In particular, the distance D2L increases moving in a longitudinal direction (*i.e.,* heel-to-toe or toeward) from the first end 144 toward the lateral midsegment 396 in the midfoot region 336 and, then, decreases moving from the lateral midsegment 396 to the second end 148 in the forefoot region 328. In the illustrated embodiment, the D2L has a maximum value in the midfoot region 336, at a point located on the lateral midsegment 396, and a minimum value in the forefoot region 328, at a point located on the second end 148, although other configurations are contemplated.

In a similar fashion, to provide a desired torsional resistance TR, the distance D2M varies between the first end 144 and the second end 148 of the medial conduit 392. In particular, the distance D2M increases moving in the longitudinal direction (*i.e.,* heel-to-toe or toeward) from the first end 144 toward the medial midsegment 400 in the midfoot region 336 and, then, decreases moving from the medial midsegment 400 to the second end 148 in the forefoot region 328. In the illustrated embodiment, the D2M has a maximum value in the midfoot region 336, at a point located on the medial midsegment 400, and a minimum value in the forefoot region 328, at a point located on the second end 148, although other configurations are contemplated. Accordingly, the lateral conduit 384 and the medial conduit 392 are arranged to be offset from the longitudinal plane LP. In the illustrated embodiment, only the central conduit 388 is intersected by the longitudinal plane LP. In some embodiments, the lateral conduit 384, the medial conduit 392, or both are arranged to be intersected by the longitudinal plane LP. Further, the lateral conduit 384, the medial conduit 392, and the central conduit 388 are arranged at different distances from one another. For example, the lateral conduit 384 can be located closer to the central conduit 388 than to the medial conduit 388. In some embodiments, the lateral conduit 384 is at least partially arranged to be equidistant from the medial conduit 392 and the central conduit 388. By arranging the lateral conduit 384 and the medial conduit 388 in similar but mirrored paths about the longitudinal plane LP or the central axis 202 of the central conduit 388, the torsional resistance TR may be balanced or symmetrical about the longitudinal axis L or about the central axis 202 of the central conduit 388. In some embodiments, the lateral conduit 384, the medial conduit 392, and the central conduit 388 offer an asymmetrical torsional resistance TR about the longitudinal axis L or the central axis 202 of the central conduit 388.

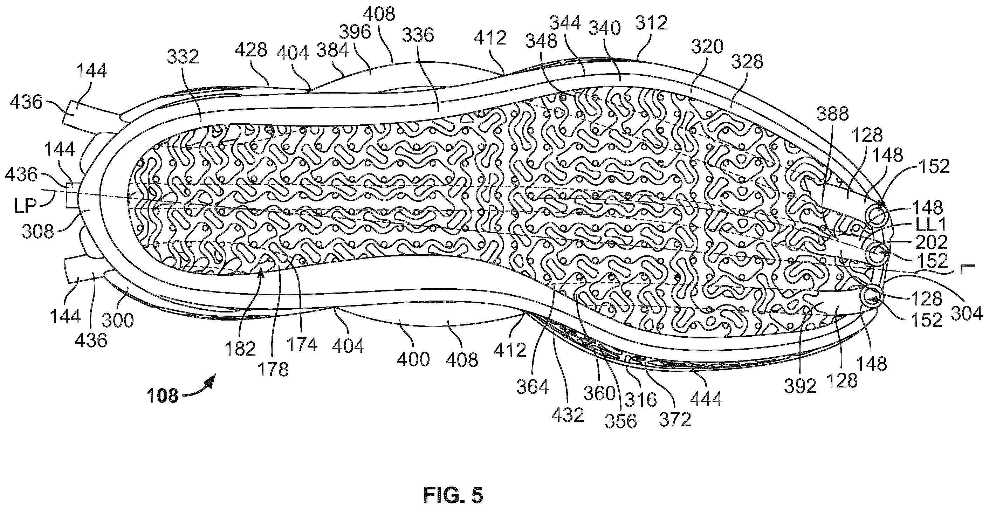

Referring to FIGS. 5, 6, and 9-11, the lateral conduit 384 and the medial conduit 392 are arranged to extend across the midsole 356 of the sole structure 300 in a non-parallel configuration. Put another way, the lateral conduit 384 and the medial conduit 392 extend toward or away from one another within the sole structure 300. For example, moving in the toeward direction, the lateral conduit 384 and the medial conduit 392 converge toward one another in the heel region 332 between the first ends 144 and the respective midsegments 396, 400. In the midfoot region 336, the lateral conduit 384 diverges away from the medial conduit 392 between a rear intersection 404 and a peak 408 of the lateral midsegment 396, and the lateral conduit 384 converges toward the medial conduit 392 from the peak 408 to a front intersection 412. Further, the lateral conduit 384 and the medial conduit 392 converge toward one another between the respective midsegments 396, 400 and the second ends 148. Accordingly, the lateral conduit 384 and the medial conduit 392 are arranged to be non-parallel relative to one another within each of the forefoot region 328, the midfoot region 336, and the heel region 332 of the sole structure 300. In some embodiments, the lateral conduit 384 and the medial conduit 392 are arranged to be parallel with one another along at least a portion of the sole structure 300. In some embodiments, the lateral conduit 384 and the medial conduit 392 are arranged to be parallel with one another along the entire sole structure 300.

As illustrated in FIGS. 6 and 9-11, the central conduit 388 is disposed between the lateral conduit 384 and the medial conduit 392 and is at least partially intersected by the longitudinal plane LP. In the illustrated embodiment, the longitudinal plane LP intersects the first end 144 of the central conduit 388 adjacent the heel end 308 and then curves toward the lateral side 312 to define a central midsegment 416 that is disposed laterally of the longitudinal plane LP in the midfoot region 336 before curving back toward the longitudinal plane LP within the forefoot region 328, where the second end 148 of the central conduit 388 is intersected by the longitudinal plane LP. The bottom surface 352 or ground-contacting surface of the bottom side 324 of the sole structure 300 includes a plurality of recesses 420 that are configured to receive portions of an outsole (not shown). In addition, an aperture 424 is formed through the bottom side 324 of the sole structure 300 along at least the midfoot region 336. The central midsegment 416 of the central conduit 388 is at least partially visible through the aperture 424, although other configurations are possible.

For purposes of clarity, the length LL1 of the lateral conduit 384 is depicted in FIG. 5, but it will be appreciated that each of the medial conduit 392 and the central conduit 388 similarly define respective lengths. In some embodiments, each of the lateral conduit 384, the medial conduit 392, and the central conduit 388 have equal or identical lengths LL1. In some embodiments, each of the lateral conduit 384, the medial conduit 392, and the central conduit 388 have different lengths LL1 from one another. In some embodiments, the length LL1 of the conduits 384, 388, 392 is reduced by less than 1%. In some embodiments, the length LL1 of the conduits 384, 388, 392 is reduced by more than 25%. Referring to FIG. 7, the lateral sidewall 368 includes a lateral ridge 428 that is disposed between the top side 320 and the bottom side 324 of the sole structure 300 and extends in a curvilinear path from the toe end 304 to the heel end 308. The lateral ridge 428 is arranged closer to the bottom side 324 in the forefoot region 328 and at least part of the midfoot region 336. The lateral ridge 428 is arranged closer to the top side 320 in the heel region 332 and at least part of the midfoot region 336. The lateral ridge 428 is intersected by the lateral conduit 384 and extends along a portion of the lateral midsegment 396 and the first end 144.

Referring to FIG. 8, the medial sidewall 372 includes a medial ridge 432 that is disposed between the top side 320 and the bottom side 324 of the sole structure 300 and extends in a curvilinear path from the toe end 304 to the heel end 308. The medial ridge 432 is arranged closer to the bottom side 324 in the forefoot region 328 and at least part of the midfoot region 336. The medial ridge 432 is arranged closer to the top side 320 in the heel region 332 and at least part of the midfoot region 336. The medial ridge 432 is intersected by the medial conduit 392 and extends along a portion of the medial midsegment 400 and the first end 144.

Referring now to FIGS. 7 and 8, the second end 148 of each conduit 128 protrudes above the top surface 348 on the top side 320 of the sole structure 300 a sufficient distance for enabling a user or machine to operatively attach the injection module 112 and/or the curing module 116. Similarly, as shown in FIG. 6, the first end 144 of each conduit 128 protrudes from the heel end 308 of the sole structure 300 a sufficient distance for enabling a user or machine to operatively attach injection module 112 and/or the curing module 116. In this way, the first end 144 and the second end 148 of each conduit 128 is configured to provide an engagement interface for operatively engaging with the injection module 112, or the curing module 116.

As described above in connection with FIG. 1, the first end 144 and the second end 148 of the conduits 128 are configured to be at least partially removed by cutting or trimming by operation of the finishing module 120. Such trimming or cutting can occur after the curing module 116 cures the reinforcement material 132 introduced by the injection module 112, such that the finishing module 120 removes a portion of the conduit 128, the reinforcement material 132, or both. Accordingly, the first and second ends 148 of the conduit 128 have a sacrificial or detachable portion 436. The sacrificial portion 436 of the conduits 128 may be demarcated from adjacent portions of the conduit 128 by a marking 440, such as, *e.g.,* a solid or dashed line segment, a symbol, or the like. Put another way, the marking 440 can be a visible indicator including at least one of a color contrast, texture contrast, perforations, or indicia. In some instances, the marking 440 is integrally formed or printed with the conduit 128. In some embodiments, the marking 440 is applied by the finishing module 120. In some embodiments, the marking 440 is applied by the manufacturing module 104. In some instances, the marking 440 is applied to the conduit 128 by adhesive, fastening, ink, machining, clamping, slicing, or heat. In some instances, the marking 440 is temporary and formed using a laser beam or light source. In some embodiments, the marking 440 forms a frangible region or feature that facilitates the removal of the sacrificial portion 436 of the conduit 128, such as, e.g., perforations or thinned sections. The sacrificial portion 436 may be provided on the conduit 128 at a location that is spaced apart from the first end 144 or the second end 148. For example, the sacrificial portion 436 may be the lateral midsegment 396, or at a location between the lateral midsegment 396 and the first end 144. Further, the length LL1 of the conduits 384, 388, 392 is configured to be reduced by operation of the finishing module 120 when the sacrificial portions 436 of the first and second ends 144, 148 are removed. Accordingly, the length LL1 of the conduits 384, 388, 392 may be reduced between about 1% and about 25%.

In some instances, the first end 144 and the second end 148 of the conduits 128 are configured to be trimmed back to be flush or even an exterior surface 444 of the sole structure 300, including the top surface 348, the bottom surface 352, the lateral sidewall 368, the medial sidewall 372, and the heel end 308. For example, FIG. 4 depicts the heel end 308 of the article of footwear 380 after the first end 144 of the lateral conduit 384 has been trimmed back or removed to be flush with the exterior surface 444 of the sole structure 300. In the illustrated embodiment, the lateral midsegment 396 of the lateral conduit 384 remains exposed and intact outboard of the lateral sidewall 368 of the sole structure 300. In other embodiments, the lateral midsegment 396 may be removed to be flush with the exterior surface 444 of the lateral sidewall 368 of the sole structure 300. Additionally, the second end 148 of the conduits 128 is configured to be removed to facilitate attachment of the upper 376 to the top side 320 of the sole structure 300. In some embodiments, the first end 144 and the second end 148 of the conduits 128 may be removed so as to be recessed from the exterior surface 444 of the sole structure 300. In some embodiments, the first end 144 and the second end 148 of the conduits may be partially removed so that a portion extends or protrudes from the exterior surface of the sole structure 300. In some embodiments, the first end 144 and the second end 148 are not removed.

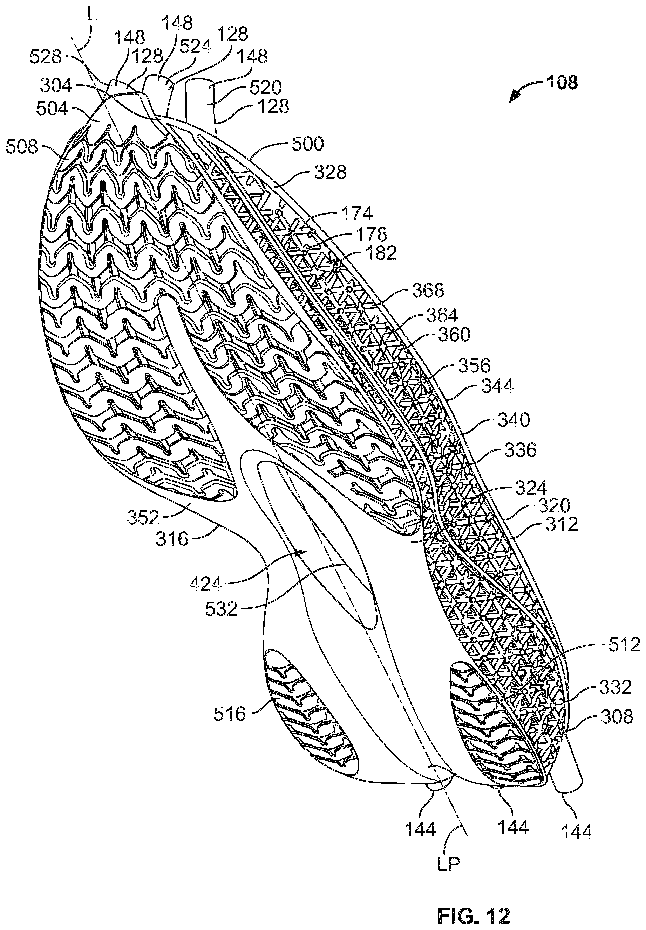

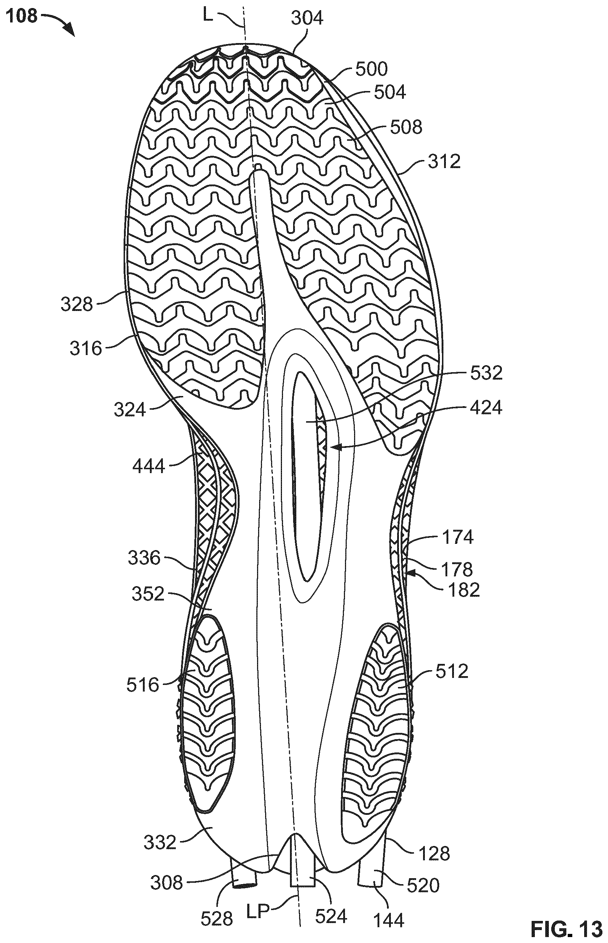

FIGS. 12 and 13 depict another embodiment of the component 108 in the form of a sole structure 500 is configured to be used with the systems and methods disclosed herein. Like reference numerals and terms will be used to describe aspects of the sole structure 500 that are structurally or functionally equivalent with those of the sole structure 300 of FIGS. 3-11. In FIGS. 12 and 13, the bottom side 324 of the sole structure 500 is depicted with an outsole 504. In the illustrated embodiment, the outsole 504 comprises a front outsole portion 508, a rear lateral outsole portion 512, and a rear medial outsole portion 516. In addition, the aperture 424 is formed through the bottom side 324 of the sole structure 500 along at least the midfoot region 336. The outsole 504 may be formed from one or more materials to impart durability, wear-resistance, abrasion resistance, or traction to the sole structure 300. In some embodiments, the outsole 504 may be formed from any kind of elastomer material, e.g., rubber, including thermoset elastomers or thermoplastic elastomers, or a thermoplastic material, *e.g.*, thermoplastic polyurethane (TPU). In some embodiments, the outsole 504 may define a shore A hardness up to 95. In addition, the outsole 504 may be manufactured by a process involving injection molding, vulcanization, printing layer by layer, *i.e.*, additive manufacturing systems or methods, and the like.

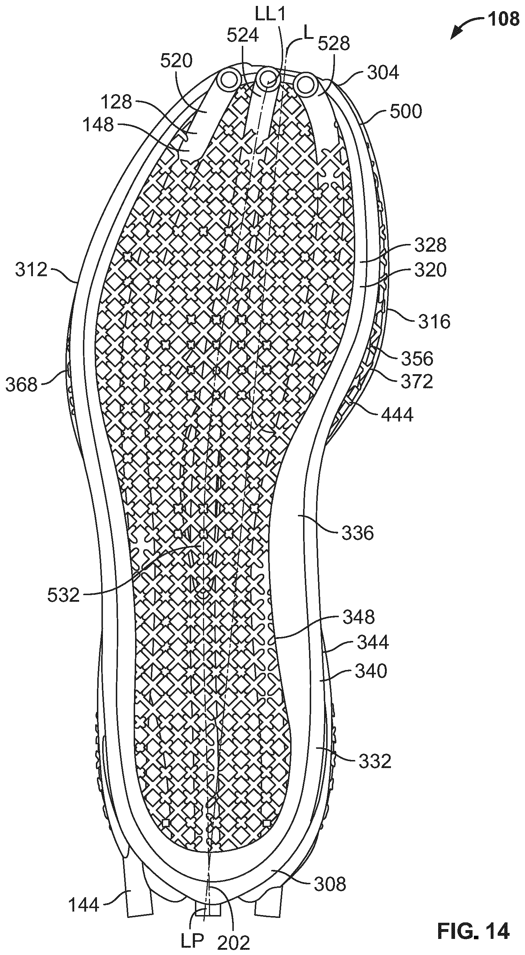

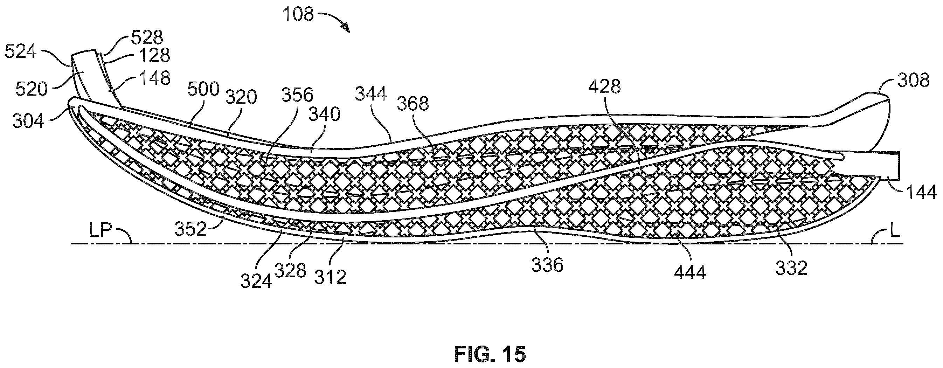

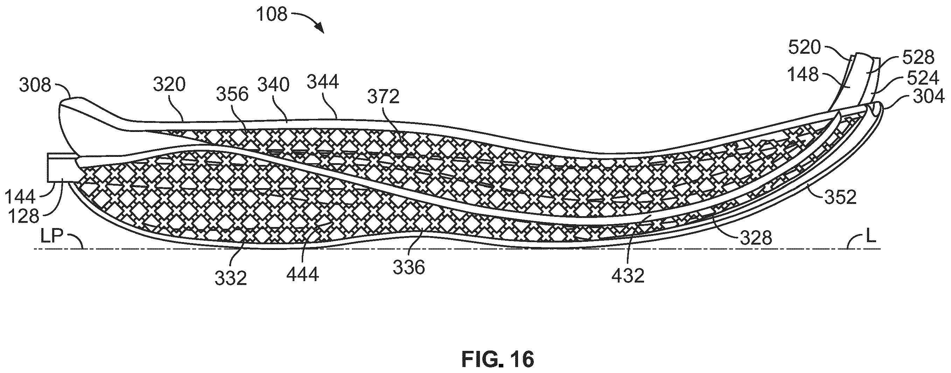

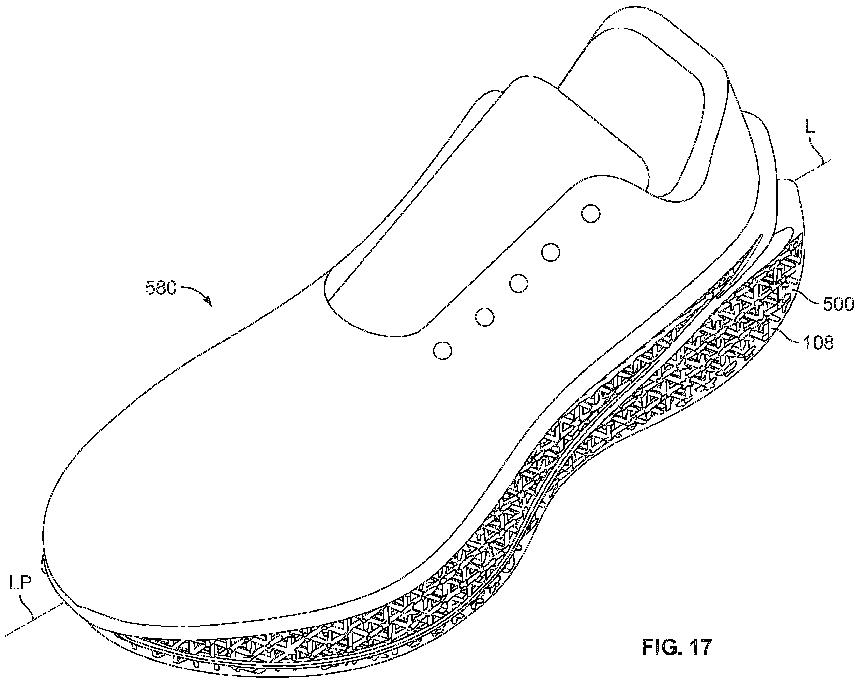

FIGS. 14-16 depicts the sole structure 500 of FIGS. 12 and 13 but with the outsole 504 hidden or removed. The sole structure 500 includes conduits 128 comprising a lateral conduit 520, a central conduit 524, and a medial conduit 528 that extend through the midsole 356 from the heel end 308 toward the toe end 304. The central conduit 524 has a central midsegment 532 that is at least partially visible through the aperture 424, although other configurations are possible. Unlike the embodiment of FIGS. 3-11, the lateral conduit 520 and the medial conduit 528 do not extend outwardly or outboard of the sole structure 500 in the midfoot region 336. In comparison, the lateral conduit 520 and the medial conduit 528 are arranged to enable the sole structure 500 to be more flexible with respect to torsional resistance TR, as the lateral conduit 520 and the medial conduit 528 define smaller values for maximum D2L and maximum D2M (see FIG. 6), respectively. In turn, this results in reinforcement members 160 that afford the sole structure 500 to provide less resistance to torsion or twisting loads than the sole structure 300 of FIGS. 3-11. The sole structure 500 includes the midsole 356 having the lattice region 360 with the lattice structure 364 comprising beams 174 that extend linearly between nodes 178 and form unit cells 186 that define a repeating pattern of across the lattice region 360 (see FIGS. 12 and 13). The lattice structure 364 of the sole structure 500 may be described as triangular, polygonal, or ordered. FIG. 17 depicts an article of footwear 580 including the upper 376 applied to the sole structure 500 of FIG. 14-16.

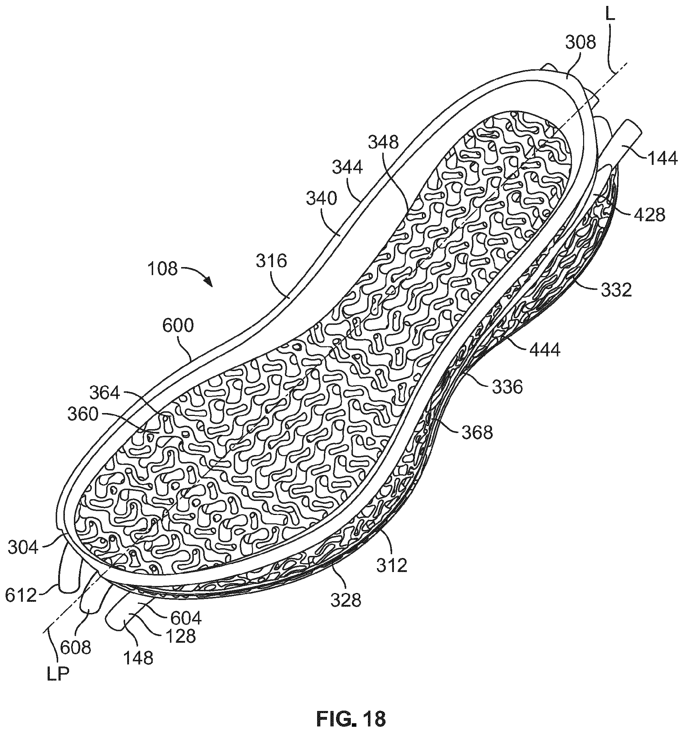

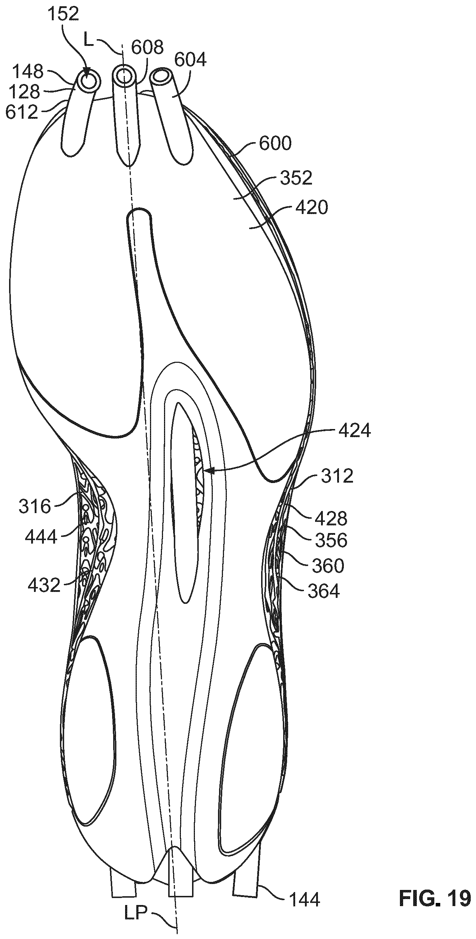

FIGS. 18 and 19 depict another embodiment of the component 108 in the form of a sole structure 600 is configured to be used with the systems and methods disclosed herein. Like reference numerals and terms will be used to describe aspects of the sole structure 600 that are structurally or functionally equivalent with those of the sole structure 300 of FIGS. 3-11. In the illustrated embodiment of FIG. 18, the sole structure 600 includes conduits 128 comprising a lateral conduit 604, a central conduit 608, and a medial conduit 612 extend through the lattice structure 364 of the midsole 356 and across the sole structure 600 from the heel region 332 to the forefoot region 328. In the illustrated embodiment, the second end 148 of each of the lateral conduit 604, the medial conduit 612, and the central conduit 608 protrudes from the bottom side 324 of the sole structure 600 adjacent the toe end 304. In particular, the second end 148 curves downwardly away from the bottom side 324. In addition, the lateral conduit 604 and the medial conduit 612 converge toward one another at the second ends 148 while extending away from the bottom side 324. The longitudinal axis L is depicted as intersecting both the second end 148 and the first end 144 of the central conduit 608. Accordingly, the first end 144 and the second end 148 of the central conduit 608 are coplanar with one another along the longitudinal plane LP. Unlike the embodiment of FIGS. 3-11, the lateral conduit 604 and the medial conduit 612 do not extend outwardly or outboard of the sole structure 600 in the midfoot region 336.

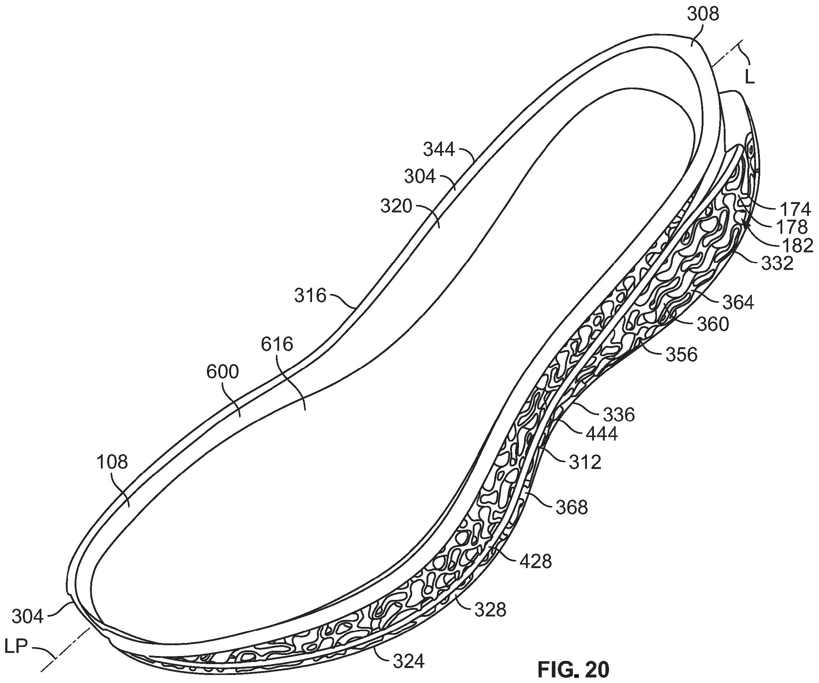

FIG. 20 depicts the sole structure 600 of FIGS. 18 and 19 in a finished configuration, after being engaged with the injection module 112, the curing module 116, and the finishing module 120, such that the sacrificial portions 436 (see FIG. 3) are removed and the conduits 128 have been converted into reinforcements 160, and prior to being assembled with an upper. Further, a footboard 616 is attached to the top surface 348 and surrounded by the upper rim 340. The footboard 616 may be part of an insole that is configured to be disposed within an upper for additional comfort and insulation. In some embodiments, the footboard 616 is a plate that provides additional stability or energy return for a user. The footboard 616 is applied to the top surface 348 to cover the conduits 128 disposed in the midsole 356 of the sole structure 600 and may be in contact with the second end 148 of each of the conduits 128.

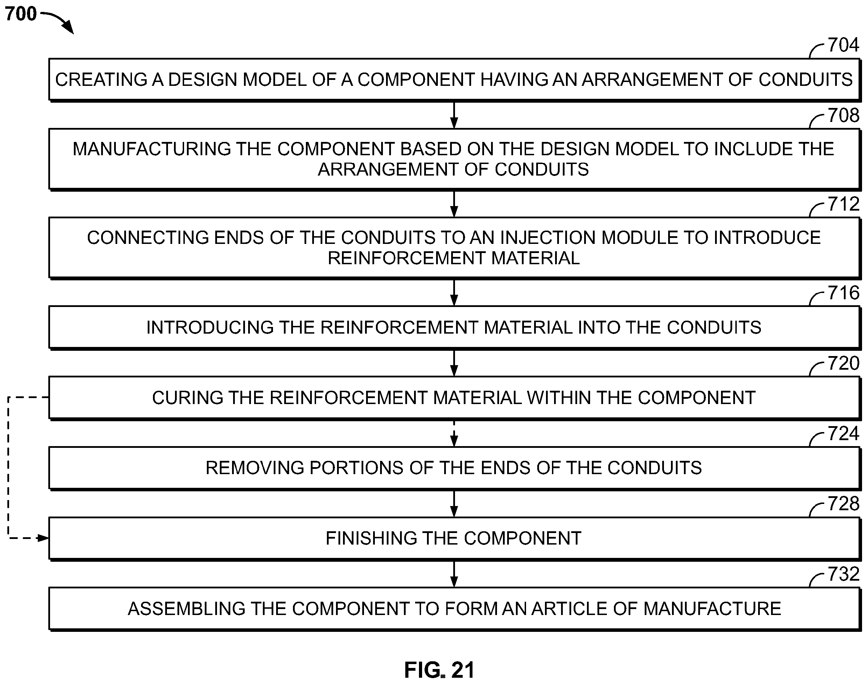

FIG. 21 depicts an exemplary method 700 for manufacturing an article of footwear to include a component with reinforcements using the system 100 of FIG. 1. The method 700 includes a step 704 of creating a design model of a component, such as in the form of a sole structure, to include an arrangement of conduits to provide reinforcement or other benefits. For example, the component 108 may be designed, simulated, modified, and optimized within a CAD program, such as, *e.g.,* a program using Finite Element Analysis (FEA), meshless methods, boundary element method (BEM), topology optimization algorithms, regression modeling or implicit bodies, or other simulations and analyses, to determine regions, areas, or points within the component 108 that can benefit from reinforcement, thereby tuning the reinforcements 160 and the component 108 to have the desired performance properties. Such benefits may include comfort, stability, energy return or propulsion, tensile or compressive strength, or bending or torsional resistance. Other benefits may not be associated with other properties, such as by providing the component 108 with electrical or thermal conductivity, the ability to detect or measure various characteristics or conditions, such as, *e.g.*, stress, strain, speed, direction, elevation, temperature, location, or combinations thereof. The CAD program can be operated iteratively until reaching an optimized or modified design of the component 108 having the desired reinforcement or benefits. In some embodiments, CAD program utilizes optimization software, such as, nTopology®, which is an engineering design manufacturing software that combines 3D modeling, simulation, and manufacturing processes into one computational environment managed through a visual programming interface. In some instances, the component 108 is designed based on measurements or data obtained during experimentation, such as data derived from testing physical articles (*e.g.*, prototypes or reference articles) equipped with sensors, or based on user input, or based on data collected from a variety of users and testing, or combinations thereof. In some embodiments, the components, the reinforcement members, the support members/regions, the chassis/sole plates, and/or any portion of the sole structures described herein can be designed, customized, and/or optimized based on user data or input. In some embodiments, the components, the reinforcement members, the support members/regions, the chassis/sole plates, and/or any portion of the sole structures described herein can be designed, customized, and/or optimized on a computer system or computer medium. Therefore, the sole structures described herein can be specifically designed for a specific user.

The method 700 includes a step 708 of a forming the component, *e.g.*, the sole structure 300, 500, 600, using an additive manufacturing system based on the design model to include the one or more conduits for receiving reinforcement material. For example, the manufacturing module 104 may include a 3D printer that receives the optimized or modified design model and forms the sole structure 300 with the conduits 128, including the lateral conduit 384, the central conduit 388, and the medial conduit 392, each of the conduits 128 having the first end 144 or inlet end and the second end 148 or outlet end and the channel 152 that is disposed between the first and second ends 144, 148. The method 700 further includes a step 712 of connecting an end of each conduit to an injection module. As described above, the injection module 112 may be operatively, removably coupled to the first end 144, the second end 148, or both, of each of the conduits 384, 388, 392. The method 700 further includes a step 716 of introducing a reinforcement material into the one or more conduits. For example, the injection module 112 can introduce the reinforcement material 132 comprising the resin 136 and fiber bundles 140 into the channel 152 of the conduits 128. In some instances, the injection module 112 introduces the reinforcement material 132 into each of the lateral conduit 384, the central conduit 388, and the medial conduit 392. In some examples, the injection module 112 introduces the reinforcement material 132 into fewer than all of the conduits 128, such as, *e.g.,* only the lateral conduit 384 and the medial conduit 392.

With continued reference to FIG. 21, the method 700 further includes a step 720 of curing the reinforcement material 132 within the component 108. In particular, using the curing module 116, the reinforcement material 132 inserted and remaining within the component 108 is cured. As described above, the curing module 116 may include the application of heat, light, electricity, or combinations thereof. In some applications, the curing module 116 may include the application of tension or compression so that, after curing, the reinforcements 160 and component 108 will be pre-tensed or pre-loaded to impart desired behaviors or performance properties to the component 108. Parameters associated with the curing module 116 may be varied based on the materials, volume, mass, and/or arrangement of the reinforcement material 132 in the component 108. As a result of the curing process, the reinforcement material 132 transforms or converts to reinforcement members 160. The reinforcement members 160 can include the reinforcement material 132, the conduit 128, or both. In some embodiments, the conduits 128 are configured to be removed so that the reinforcement member 160 is formed primarily by the reinforcement material alone. The method may further include a step 720 of removing a portion of the end of each conduit. For example, using the finishing module 120, the first end 144 of each conduit 128 may be removed or trimmed back. In some embodiments, the second end 148 of each conduit 128 may be removed or trimmed back. In some embodiments, the step 724 is not performed and ends of the conduits 128 are not trimmed. The method 700 further includes a step 728 of finishing the component. As described above in connection with FIG. 1, the component 108 may be treated by various finishing methods or techniques using the finishing module 120. Finally, the method 700 includes a step 732 of assembling the component into an article of manufacture. In some embodiments, the component 108 is the sole structure 300 that is assembled with the upper 376 (see FIG. 4) to form the article of footwear 380. In some embodiments, the component 108 is the sole structure 500 that is assembled with the outsole 504 (see FIG. 8) and the upper 376 to form the article of footwear 580. In some embodiments, the component 108 is the sole structure 600 that is assembled with the footboard 616 (see FIG. 20).

It will be appreciated the method 700 of FIG. 21 can be used with a variety of components, including any of the sole structures 300, 500, 600 disclosed herein, to form the reinforcement members 160. Further, the method 700 is not limited to the particular sequential order in which the steps are discussed above. In connection with the method 700, it is possible to design and manufacture a sole structure that is customized for or unique to particular users, sports, professions, functions, or benefits. Further, in connection with the method 700, it is possible to design and manufacture a variety of components, such as articles of apparel or clothing, sports equipment, jewelry, tools, or other devices.

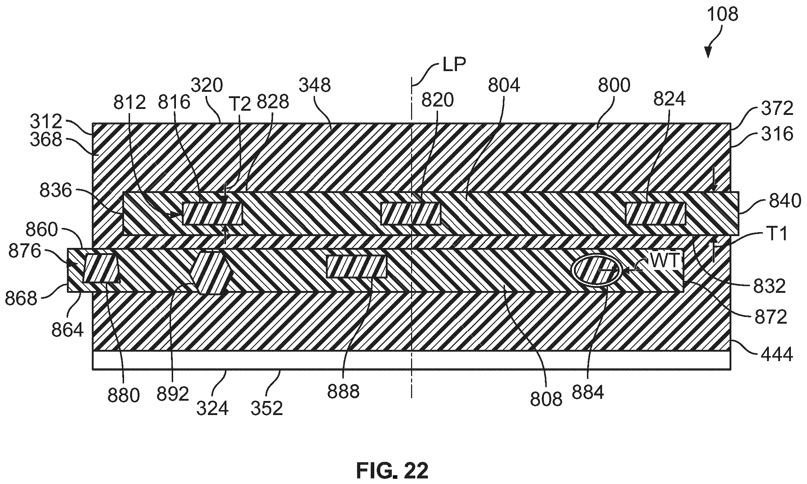

FIG. 22 illustrates a representative diagram of a cross-sectional view of a sole structure 800 formed in accordance with the methods and systems described herein and having a first plate 804 and a second plate 808. Each of the first and second plates 804, 808 extend through the sole structure 800 and include at least one reinforcement member. In the illustrated embodiment, the first plate 804 includes a first plurality of reinforcement members 812 arranged therein, including a first lateral reinforcement 816, a first central reinforcement 820, and a first medial reinforcement 824. Each of the first reinforcement members 812 has a rectangular cross-sectional shape that is composed of the reinforcement material 132, after being cured, which is disposed within and at least partially surrounded by the conduit 128. The first plate 804 defines a plate thickness T1 in vertical direction in parallel with the longitudinal plane LP, and the plate thickness T1 is measured between a first top surface 828 and a first bottom surface 832. The first top surface 828 of the first plate 804 is configured to face the top surface 348 of the sole structure 800. A reinforcement thickness T2 is measured in the vertical direction in parallel with the longitudinal plane LP. For purposes of clarity, the reinforcement thickness T2 is shown only with respect to the first lateral reinforcement 816. In the illustrated embodiment, the reinforcement thickness T2 is smaller than the plate thickness T1. The reinforcement thickness T2 is uniform or constant among the first plurality of reinforcement members 812. Accordingly, the first plurality of reinforcement members 812 are embedded within the first plate 804 between the first top surface 828 and the first bottom surface 832. The longitudinal plane LP intersects the first plate 804 between a first lateral surface and a first medial surface 840. Further, the longitudinal plane LP intersects the first central reinforcement 820. The first plate 804 protrudes or extends outwardly or outboard of the exterior surface 444 of the sole structure 800. In particular, the first medial surface 840 of the first plate 804 protrudes from the exterior surface 444 on the medial side 316 of the sole structure 800. By comparison, the first lateral surface 836 is disposed inwardly or inboard of the exterior surface 444 of the lateral side 312 sole structure 800. The first plurality of reinforcement members 812 are arranged entirely within the first plate 804 and entirely within the exterior surface 444 of the sole structure 800.

With continued reference to FIG. 22, the second plate 808 is arranged closer to the bottom side 324 of the sole structure 800 and the first plate 804 is arranged closer to the top side of the sole structure 800. Put another way, the first plate 804 is disposed axially above the second plate 808 along the vertical direction relative to the longitudinal plane LP. The second plate 808 has a second top surface 860 that is configured to face the first bottom surface 832. The second plate 808 has a second bottom surface 864 that is configured to face the bottom side 324 of the sole structure 800. The second plate 808 is intersected by the longitudinal plane LP between a second lateral surface 868 and a second medial surface 872. The second lateral surface 868 is configured to extend or protrude outboard or outwardly of the exterior surface 444 of the lateral side 312 of the sole structure 800. Accordingly, the second lateral surface 868 is disposed outwardly of the first lateral surface 836 of the first plate 804 relative to the longitudinal plane LP. The second medial surface 872 is disposed inwardly or inboard of the exterior surface 444 of the medial side 316 of the sole structure 800. Accordingly, the second medial surface 872 is arranged inwardly of the first medial surface 840 of the first plate 804 relative to the longitudinal plane LP.

In the second plate 808, a second plurality of reinforcement members 876 include a second lateral reinforcement 880, a second medial reinforcement 884, a second central reinforcement 888, and a second intermediate reinforcement 892. Accordingly, the second plurality of reinforcement members 876 include four reinforcements. It is contemplated that any number of reinforcement members may be included, such as, e.g., one, two, three, four, five, six, seven, eight, nine, ten, eleven, twelve, thirteen, fourteen, fifteen or more, twenty or more, twenty-five or more, thirty-five or more, fifty or more, or one-hundred or more. The second plurality of reinforcement members 876 vary in cross-sectional shape from one another. For example, the second lateral reinforcement 880 has a quadrilateral or trapezoidal shape that differs from the ovular shape of the second medial reinforcement 888. The second intermediate reinforcement 892 has a hexagonal cross-sectional shape that is different from the quadrilateral or rectangular shape of the second central reinforcement 888. In addition, the second plurality of reinforcement members vary in reinforcement thickness T2 from one another. The second medial reinforcement 884 has a wall thickness WT that is greater in comparison than the second lateral reinforcement 880. The second lateral reinforcement 880 is disposed at least partially outboard or outwardly of the exterior surface 444 of the lateral side 312 of the sole structure 800. Accordingly, at least one reinforcement of the second plurality of reinforcement members 876 is disposed outside of the midsole 356 of the sole structure 800.

In addition, the second intermediate reinforcement 892 is disposed at least partially below or outwardly of the second bottom surface 864 of the second plate 808. Accordingly, at least one reinforcement of the second plurality of reinforcement members 876 is disposed at least partially outside of the second plate 808. Each reinforcement of the second plurality of reinforcement members 876 is arranged to be offset from the longitudinal plane LP, such that the longitudinal plane LP does not intersect any of the second plurality of reinforcement members 876. Further, the second plurality of reinforcement members 876 are spaced apart from one another in the lateral-medial direction. In particular, the distance between adjacent reinforcement members of the second plurality of reinforcement members 876 varies relative to one another. For example, the second central reinforcement member 884 is disposed farther from the second medial reinforcement member 888 than from the second intermediate reinforcement member 892.

Additionally, three reinforcements of the second plurality of reinforcement members 876 are arranged laterally of the longitudinal plane LP. The second lateral reinforcement 880, the second intermediate reinforcement 892, and the second central reinforcement 884 are disposed entirely laterally of the longitudinal plane LP, while only the second medial reinforcement 888 is disposed entirely medially of the longitudinal plane LP. Accordingly, the second plurality of reinforcement members 876 is arranged in an imbalanced, asymmetrical configuration relative to the longitudinal plane LP.

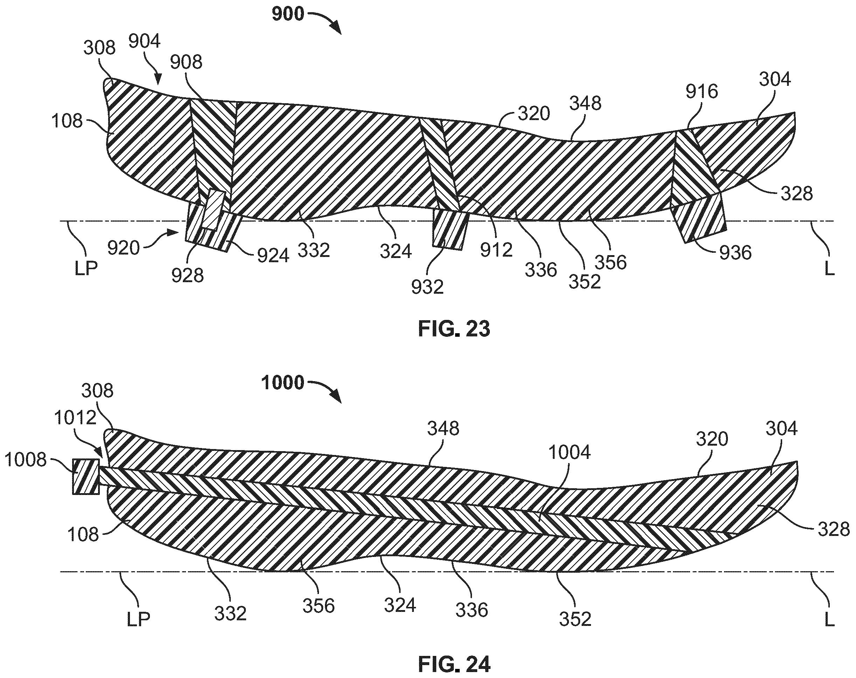

FIG. 23 illustrates a representative diagram of a cross-sectional view of a sole structure 900 formed in accordance with the methods and systems described herein and having a plurality of reinforcement members 904 including a heel reinforcement 908 that is disposed in the heel region 332, a midfoot reinforcement 912 that is disposed in the midfoot region 336, and a forefoot reinforcement 916 that is disposed in the forefoot region 328. The plurality of reinforcement members 904 extend continuously from the top surface 348 to the bottom surface 352 of the sole structure 900. Further, a plurality of cap components 920 are provided in connection with the plurality of reinforcement members 904. In particular, the heel reinforcement 908 is coupled to a heel cap 924 by a connection rod 928. In some embodiments, the heel cap 924 is coupled to the reinforcement material 132 within the heel reinforcement 908 via the connection rod 928 by threading, fastening, welding, or adhesives. The heel cap 924 may serve as a ground-engaging member, such as, *e.g.,* a cleat, spike, tread, or outsole portion within the heel region 332. The midfoot reinforcement 912 is coupled to a midfoot cap 932 by threading, fastening, welding, or adhesives, without the use of the connection rod 928. The midfoot cap 932 may serve as a ground-engaging member, such as, *e.g.,* a cleat, spike, tread, or outsole portion within the midfoot region 336. Further, the forefoot reinforcement 916 is integrally formed with a forefoot cap 936, such that both the forefoot reinforcement 916 and the forefoot cap 936 are made of the reinforcement material 132. In some embodiments, the forefoot cap 936 may serve as a ground-engaging member, such as, *e.g.,* a cleat, spike, tread, or outsole portion within the forefoot region 328. The heel reinforcement 908 varies in thickness T3, which is measured in a heel-toe direction in parallel with the longitudinal axis L. In the illustrated embodiment, the thickness T3 of the heel reinforcement member 908 decreases from the top surface 348 to the bottom surface 352 of the sole structure 900. The forefoot reinforcement 916 has a thickness T3 that decreases from the bottom surface 352 to the top surface 348 of the sole structure 900. Accordingly, the heel reinforcement 908 and the forefoot reinforcement 916 are tapered or narrowed between the top surface 348 and the bottom surface 352 of the sole structure 900.

FIG. 24 is a representative diagram of a cross-sectional view of a sole structure 1000 formed in accordance with the methods and systems described herein and having a linear reinforcement member 1004 that extends continuously from the heel end 308 and into to the forefoot region 328 of the sole structure 1000. A heel cap 1008 is mounted to the first end 144 of the linear reinforcement member 1004. The heel cap 1008 is mounted on the linear reinforcement member 1004 outwardly or outboard of the exterior surface 444 of the heel end 308 of the sole structure 1000. Accordingly, a gap 1012 is formed between the heel cap 1008 and the exterior surface 444 of the sole structure 1000. It will be appreciated the method 700 of FIG. 21 can be used to form the sole structures 300, 500, 600, 800, 900, and 1000 disclosed herein.

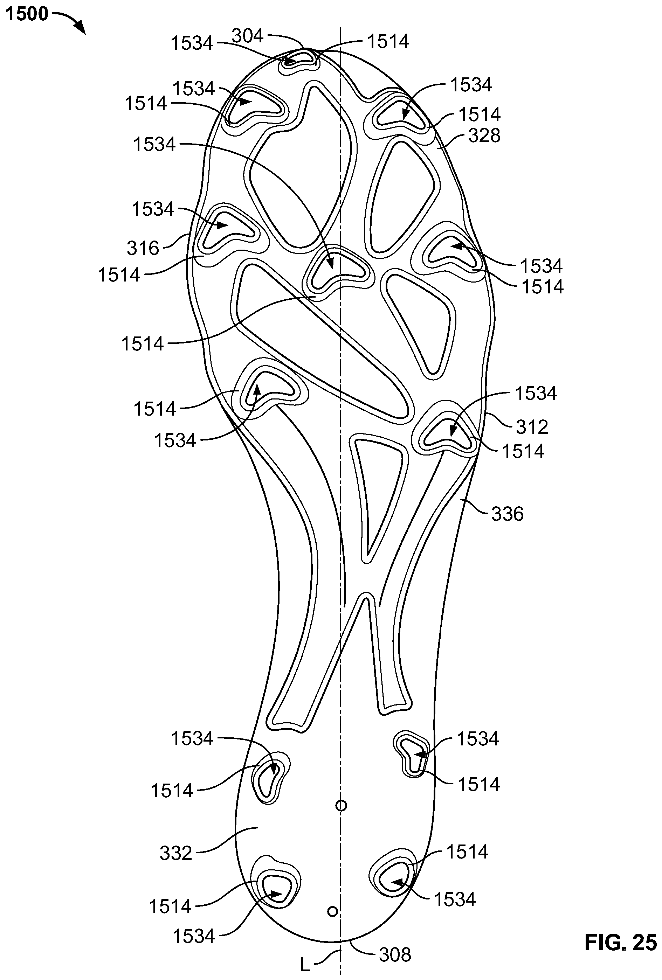

Referring to FIGS. 25-28, another embodiment of a sole structure 1500 includes a plurality of support regions 1504 arranged in various locations between the lateral side 312 and the medial side 316 and between the toe end 304 and the heel end 308. Like reference numerals and terms will be used to describe aspects of the sole structure 1500 that are structurally or functionally equivalent with those of the sole structure 300 of FIGS. 3-11. In FIGS. 25-28, the plurality of support regions 1504 can be formed of discrete lattice structures or support structures 1510 that are spaced apart from one another. As noted herein, the support structures 1510 can include interconnected ribs, struts, beams, and/or members. In some embodiments, the support structures 1510 can be a network or web of ribs, struts, beams, and/or members. Thus, it is contemplated that the support structures 1510 can be any network or web of supports. The support structures 1510 form the plurality of support regions 1504.

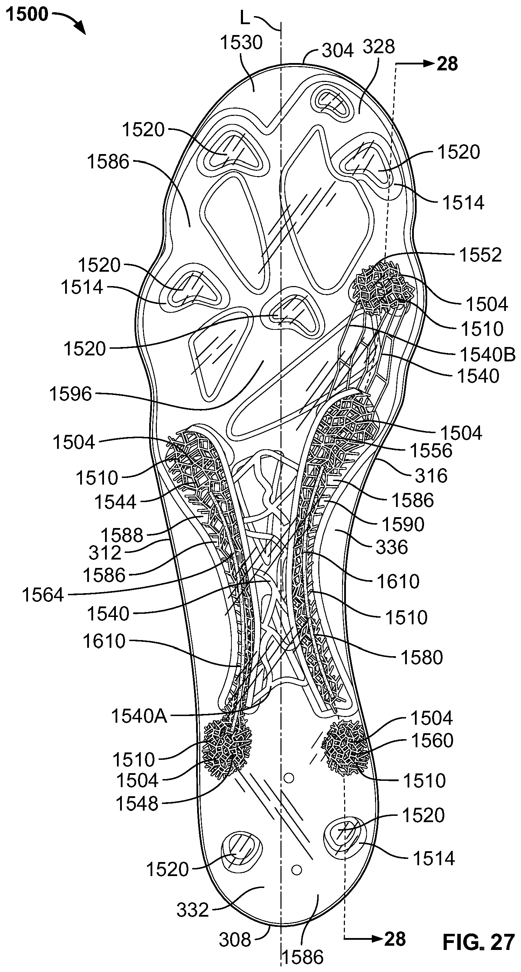

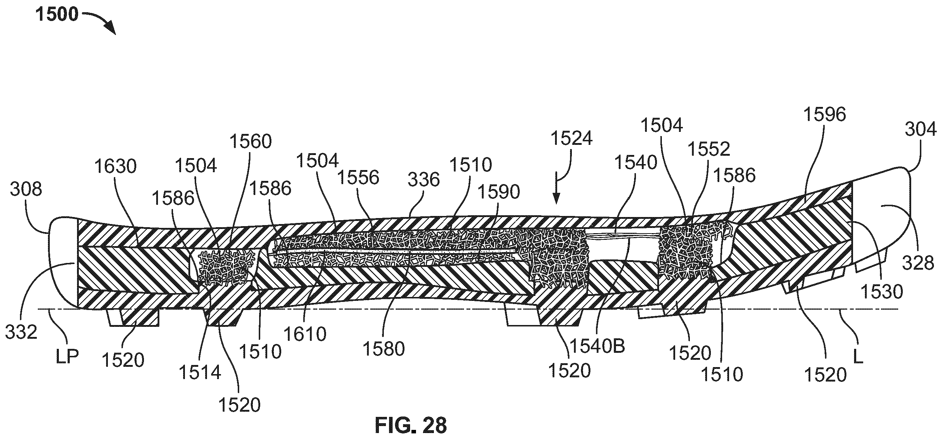

In some instances, the support structures 1510 are located in areas of the sole structure 1500 that are expected to experience high stress or high pressure. For example, finite element analysis (FEA) or other engineering analysis programs can be used to determine and predict areas that are expected to experience comparatively greater pressure, stress, or strain under expected loading due to the geometry and material properties of the sole structure 1500. The support structures 1510 may be arranged in those areas to distribute the stress or pressure across a predetermined amount of surface area, thereby reducing the amplitude of stress or pressure that is experienced in those areas. For example, in sole structures where cleats or studs are formed or attached along the ground-contacting surface or bottom surface, the support structure 1510 can be arranged within or adjacent a connection area 1514 of studs or cleats 1520 (see FIGS. 27 and 28). The support structure 1510 can be arranged and configured to reduce stress in various directions or attributed to various loads. For instance, the support structure 1510 can be configured to reduce the stress in an axial direction 1524 defined by the cleat 1520, such as by increasing the surface area over which axial stress is distributed (see FIG. 28). In some examples, the support structure 1510 can be configured to reduce the stress attributed to bending loads applied to the cleat 1520, such that the support structure 1510 increases the bending resistance of the cleat 1520 in one or more directions. Similar functionality can be provided by the support structures 1510 configured to improve resistance to torsion or rotation about the axial direction 1524. This way, the support structure 1510 reduces stress concentrations in the sole structure 1500 and, thus, provides improved comfort and strength. In some embodiments, the plurality of support regions 1504 may provide a spring effect to the user during use.

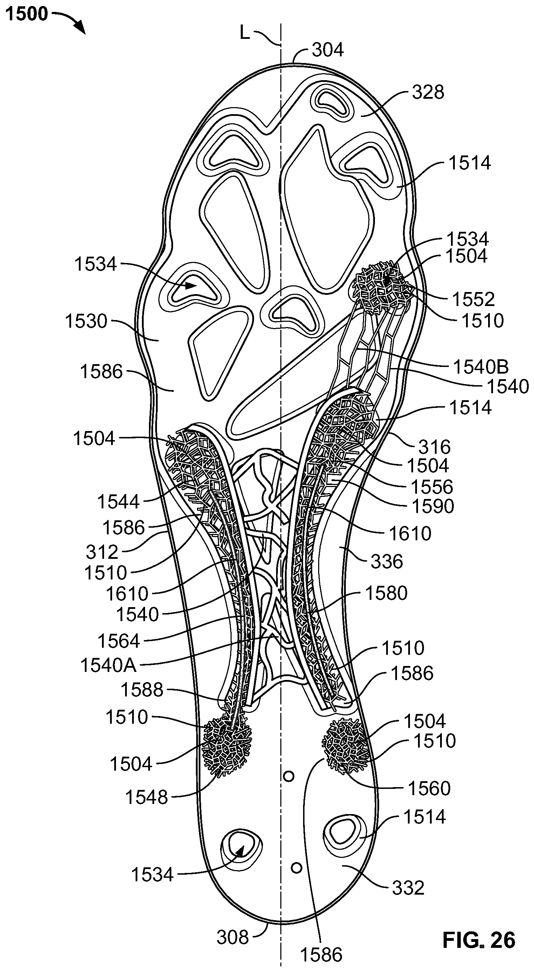

Referring to FIG. 25, a bottom view of a sole chassis or sole plate 1530 of the sole structure 1500 is illustrated. FIG. 26 illustrates a top view of the sole plate 1530 of the sole structure 1500. The sole plate 1530 in FIGS. 25 and 26 does not include any cleats 1520 attached thereon and the sole plate 1530 includes a plurality of cleat ports or openings 1534. As discussed above and as illustrated in FIG. 26, the sole structure 1500 includes the plurality of support regions 1504 comprising the support structures 1510 in various advantageous positions on the sole plate 1530. In some embodiments, the sole plate 1530 may not include any cleat ports 1534. Thus, in some embodiments, the sole structure 1500 may not include any cleats 1520 and the features outlined below may be utilized in an article of footwear with no cleats 1520, i.e., a non-cleated shoe.

Referring to FIG. 26, the sole structure 1500 is formed of discrete segments or portions that are interconnected to one another by the reinforcement material 132 and/or a plurality of support links 1540. In particular, the sole structure 1500 includes a lateral midfoot support portion 1544, a lateral heel support portion 1548, a medial forefoot support portion 1552, a medial midfoot support portion 1556, and a medial heel support portion 1560. As noted herein, the lateral midfoot support portion 1544, the lateral heel support portion 1548, the medial forefoot support portion 1552, the medial midfoot support portion 1556, and the medial heel support portion 1560 define the plurality of support regions 1504. The lateral midfoot support portion 1544 comprises a curved shape and extends along the lateral side 312 of the midfoot region 336 of the sole structure 1500 from an area adjacent the forefoot region 328 to an area adjacent the heel region 332 of the sole structure 1500. In some embodiments, the lateral midfoot support portion 1544 may extend into the forefoot region 328 and/or the heel region 332. As illustrated in FIG. 26, the lateral midfoot support portion 1544 bows toward the longitudinal axis L in the middle of the lateral midfoot support portion 1544. A lateral conduit 1564 extends along the lateral midfoot support portion 1544. The lateral conduit 1564 may be formed by and/or ultimately include therein reinforcement material 132 similar to the conduits 128 described above, using the methods disclosed herein. In some embodiments, the lateral conduit 1564 may extend through the entire lateral midfoot support portion 1544. As noted herein and as outlined above, the lateral conduit 1564 may extend along the lateral midfoot support portion 1544 in any direction or pattern. In some embodiments, the lateral conduit 1564 may extend along portions that are expected to experience comparatively greater pressure, stress, or strain under expected loading due to the geometry and material properties of the sole structure 1500.

Referring still to FIG. 26, the lateral heel support portion 1548 is positioned heelward of the lateral midfoot support portion 1544 and on the lateral side 312 of the sole structure 1500. The lateral heel support portion 1548 may be positioned over a portion of the sole plate 1530 that will comprise one of the cleats 1520. The lateral heel support portion 1548 may comprise a generally spherical shape surrounding one of the plurality of cleat ports 1534 in the sole plate 1530. As illustrated in FIG. 26, the lateral heel support portion 1548 is connected with the lateral midfoot support portion 1544. However, in other embodiments, the lateral heel support portion 1548 may not be connected with the lateral midfoot support portion 1544, i.e., it may be separate and distinct from the lateral midfoot support portion 1544. As further illustrated in FIG. 26, the lateral conduit 1564 extends partially into the lateral heel support portion 1548. In some embodiments, the lateral conduit 1564 may extend entirely through the lateral heel support portion 1548. Further, in other embodiments, the lateral conduit 1564 may not extend into the lateral heel support portion 1548.

Referring still to FIG. 26, the medial forefoot support portion 1552 is positioned in the forefoot region 328 and on the medial side 316 of the sole structure 1500, and the medial forefoot support portion 1552 is positioned over a portion of the sole plate 1530 that will comprise one of the cleats 1520 (see FIG. 28). Thus, the medial forefoot support portion 1552 is positioned over one of the cleat ports 1534 in the sole plate 1530. Similar to the lateral heel support portion 1548, the medial forefoot support portion 1552 comprises a generally cylindrical shape. The medial forefoot support portion 1552 is connected to the medial midfoot support portion 1556 by the plurality of support links 1540. As noted herein, the plurality of support links 1540 connect one or more of the plurality of support regions 1504 together. In some embodiments, the support links 1540 may comprise the same material and properties as the support structure 1510. Further, in some embodiments, the support links 1540 may comprise the same material and properties as the reinforcement material 132, e.g., the lateral conduit 1564. Furthermore, in other embodiments, the support links 1540 may comprise a different material or comprise different material properties than the support structure 1510 and/or reinforcement material 132. As illustrated in FIG. 26, the support links 1540 can be formed of the same support structure 1510 as the support structure 1510 within the plurality of support regions 1504 but with a lower density, i.e., less beams 174 and/or nodes 178 per similar volume or unit cell 186. Thus, the support links 1540 may include just a few beams 174 that extend out in multiple directions from one or more of the plurality of support regions 1504. In some embodiments, the support links 1540 may include thicker (or thinner) beams 174 than the support structure 1510 within the plurality of support regions 1504. Still further, in some embodiments, one or more of the beams 174 within the support links 1540 may comprise a different thickness, e.g., support links 1540A connecting the lateral midfoot support portion 1544 and the medial midfoot support portion 1556 may be thicker than support links 1540B connecting the medial forefoot support portion 1552 and the medial midfoot support portion 1556.

Referring still to FIG. 26, the medial midfoot support portion 1556 is connected with the medial forefoot support portion 1552 via the plurality of support links 1540B. The medial midfoot support portion 1556 comprises a curved shape and extends along the medial side 316 of the midfoot region 336 of the sole structure 1500 from an area adjacent the forefoot region 328 to an area adjacent the heel region 332 of the sole structure 1500. In some embodiments, the medial midfoot support portion 1556 may extend into the forefoot region 328 and/or the heel region 332. As illustrated in FIG. 26, the medial midfoot support portion 1556 bows toward the longitudinal axis L in the middle of the medial midfoot support portion 1556. Thus, the medial midfoot support portion 1556 and the lateral midfoot support portion 1544 bow toward each other and then away from each other as they extend heelward from an area adjacent the forefoot region 328. A medial conduit 1580 extends along the medial midfoot support portion 1556. The medial conduit 1580 may be formed by and/or ultimately include therein reinforcement material 132 similar to the conduits 128 described above, using the methods and systems disclosed herein. In some embodiments, the medial conduit 1580 may extend through the entire medial midfoot support portion 1556. As noted herein and as outlined above, the medial conduit 1580 may extend along the medial midfoot support portion 1556 in any direction or pattern. In some embodiments, the medial conduit 1580 may extend along portions that are expected to experience comparatively greater pressure, stress, or strain under expected loading due to the geometry and material properties of the sole structure 1500.

Referring still to FIG. 26, the medial heel support portion 1560 is positioned heelward of the medial midfoot support portion 1556 and on the medial side 316 of the sole structure 1500. The medial heel support portion 1560 may be positioned over a portion of the sole plate 1530 that will comprise one of the cleats 1520 (see FIG. 28). The medial heel support portion 1560 may comprise a generally cylindrical shape positioned on one of the cleat ports 1534 in the sole plate 1530. As illustrated in FIG. 26, the medial heel support portion 1560 is not connected with the medial midfoot support portion 1556. However, in alternative embodiments, the medial heel support portion 1560 may be connected with the medial midfoot support portion 1556 similar to the lateral midfoot support portion 1544 and the lateral heel support portion 1548. In some embodiments, the support links 1540 may connect the medial heel support portion 1560 and the medial midfoot support portion 1556. As further illustrated in FIG. 26, the medial conduit 1580 does not extend into the medial heel support portion 1560. In alternative embodiments, the medial conduit 1580 may extend partially into or entirely through the medial heel support portion 1560. As noted herein, the medial heel support portion 1560 is generally aligned with the lateral heel support portion 1548.

Referring still to FIG. 26, the plurality of support links 1540 include the plurality of support links 1540A that connect the medial midfoot support portion 1556 and the lateral midfoot support portion 1544 and the plurality of support links 1540B that connect the medial midfoot support portion 1556 and the medial forefoot support portion 1552. As discussed above, the plurality of support links 1540A are thicker than the plurality of support links 1540B. However, in some embodiments, the support links 1540A may comprise the same support structure type as the support links 1540B, *i.e.,* have the same thickness. As noted herein, the support links 1540 can extend along portions of the sole structure 1500 that are expected to experience comparatively greater pressure, stress, or strain under expected loading due to the geometry and material properties of the sole structure 1500. As such, the support links 1540 may connect one or more of the plurality of support regions 1504 and/or provide support and/or distribute the stress or pressure across a predetermined amount of surface area, thereby reducing the amplitude of stress or pressure that is experienced in those areas of the sole structure 1500. As further noted herein, any of the plurality of support regions 1504 may be connected by the plurality of support links 1540.

Referring still to FIG. 26, the sole plate 1530 includes a plurality of recesses 1586 positioned therein. In particular, the lateral midfoot support portion 1544 is positioned within a lateral pocket 1588 within the sole plate 1530. Similarly, the medial midfoot support portion 1556 is positioned within a medial pocket 1590 within the sole plate 1530. The lateral pocket 1588 comprises a similar shape as the lateral midfoot support portion 1544 and the medial pocket 1590 comprises a similar shape as the medial midfoot support portion 1556. As noted herein, the lateral pocket 1588 and the medial pocket 1590 are part of the plurality of recesses 1586 within the sole plate 1530. In some embodiments, the plurality of support regions 1504 may be positioned within the plurality of recesses 1586 within the sole plate 1530.

Referring still to FIG. 26, all of the plurality of support regions 1504 except the medial heel support portion 1560 are a single, integral component, *i.e.,* they are all connected to each other by the support structure 1510 or by the support links 1540. In some embodiments, all of the plurality of support regions 1504 may be formed as a single, integral component. Further, in some embodiments, one or more of the plurality of support regions 1504 may be distinct or separate from the other regions 1504. For example, each of the plurality of support regions 1504 may be its own separate component or structure, *i.e.,* not connected to another support region 1504 by support structure 1510 and by the support links 1540.

As noted herein, the plurality of support regions 1504 shown in FIG. 26 illustrate just a single example. Thus, it is contemplated that the sole structure 1500 may include greater or fewer support regions 1504 than illustrated, and each support region 1504 may include a different shape, configuration, or make up than illustrated. As discussed above, the plurality of support regions 1504 can be advantageously placed around the sole structure 1500 to provide support and distribute the stress or pressure across a predetermined amount of surface area, thereby reducing the amplitude of stress or pressure that is experienced in those areas of the sole structure 1500. For example, in some embodiments, the sole structure 1500 may include a support region over each of the cleat ports 1534. Further, in other embodiments, the sole structure 1500 may include a single support region extending over the entire sole plate 1530. In some embodiments, one or more of the plurality of support regions 1504 may be added to the sole structure 1500 for aesthetic purposes only. Further, it is contemplated that the sole structure 1500 can include a greater or fewer number of conduits 1564, 1564 than shown. For example, in some embodiments, each of the plurality of support regions 1504 may include one or more conduits 1564, 1580 therein. Further, as discussed above, a single conduit 1564, 1580 may extend into and/or through one or more of the plurality of support regions 1504. It is noted that the conduits 1564, 1580 can take any shape or follow any path along the sole structure 1500. Further, in some embodiments, one or more conduits 1564, 1580 may extend through the support links 1540 and/or portions outside of the plurality of support regions 1504 within the sole structure 1500. Furthermore, in some embodiments, one or more conduits 1564, 1580 may extend outside of the sole structure 1500 similar to the conduits 128 described above. Thus, as noted herein, it is contemplated that the conduits 1564, 1580 here may be the same (and include the same features and configurations) as the conduits 128 described above. Still further, in alternative embodiments, the sole structure 1500 may not include any conduits 1564, 1580 therein. In some embodiments, the sole structure 1500 may include support structure 1510 and/or conduits 1564, 1580 that connect with and/or bond to the upper 376.

Referring to FIG. 27, the sole structure 1500 is illustrated with the plurality of cleats 1520 overmolded onto the sole plate 1530 and the plurality of support regions 1504. As will be discussed in further detail herein, after the plurality of support regions 1504 are added to the sole plate 1530, the sole plate 1530 with the support regions 1504 may be put in a mold and encased with an encasing material 1596. The encasing material 1596 may have varying levels of flexure and/or stiffness depending on the use of the sole structure 1500. In some embodiments, the plurality of cleats 1520 may be formed from the encasing material 1596. However, in other embodiments, the plurality of cleats 1520 may be formed of a different material than the encasing material 1596. For example, in some embodiments, the plurality of cleats 1520 may be added to the sole structure 1500 after the encasing material 1596 is added thereon. In such an embodiment, the plurality of cleats 1520 may be metal cleats that are secured to the cleat ports 1534 after the sole plate 1530 is molded. As noted herein, the encasing material 1596 can be any type of material to encase the sole plate 1530 and the plurality of support regions 1504.

In some embodiments, the encasing material 1596 may be a thermoplastic such as a TPU and/or TPE. In some embodiments, the encasing material 1596 may be made of polymers containing an aliphatic component, an aromatic component, and/or combinations thereof. In some embodiments, the encasing material 1596 may be made up of polymers including Polyamide (PA), PEBA(X), and/or Polypropylene (PP). In some embodiments, the encasing material 1596 may contain a foam such as EVA, TPU, and/or PU. Further, in some embodiments, the encasing material 1596 may be rubber, PEBAX, and/or TPE-E. As illustrated in FIG. 27, the encasing material 1596 is a transparent material. Therefore, the plurality of support regions 1504 can be seen through the encasing material 1596 of the sole structure 1500 and from an exterior of the sole structure 1500. In some embodiments, the encasing material 1596 may be translucent and/or opaque. Thus, in alternative embodiments, the plurality of support regions 1504 may not be seen through the encasing material 1596.

Referring still to FIG. 27, the medial conduit 1580 and the lateral conduit 1564 have been converted to reinforcement members 1610. Before the sole plate 1530 is encased by the encasing material 1596, the conduits 1564, 1580 may receive the reinforcement material 132 in a similar way as described above with respect to the conduits 128. Therefore, the medial conduit 1580 and the lateral conduit 1564 may be formed into the reinforcement members 1610 by way of the reinforcement material 132. As noted herein, the reinforcement material 132 may be added to the conduits 1564, 1580 in the same way and process as outlined above with respect to the conduits 128. Thus, in some embodiments, the conduits 1564, 1580 may extend out of the support structure 1510 in order for the reinforcement material 132 to be added into the conduits 1564, 1580, in a similar manner as described above. Thus, after the conduits 1564, 1580 have been filled with the reinforcement material 132, the conduits 1564, 1580 may be trimmed/cut as outlined above. Therefore, in some embodiments, FIG. 26 may illustrate the conduits 1564, 1580, *i.e.,* the reinforcement members 1610, after they have been filled with the reinforcement material 132 and trimmed/cut. As noted herein, the conduits 1564, 1580 are transformed into the reinforcement members 1610 once the conduits 1564, 1580 receive the reinforcement material 132 therein. Therefore, the conduits 1564, 1580 and the reinforcement members 1610 are the same except for the reinforcement material 132 being within the reinforcement members 1610. For ease of description, it is noted herein that the terms conduits 1564, 1580 and reinforcement members 1610 may be interchangeably used or referenced when describing the features.

Referring to FIG. 28, a cross sectional view of the sole structure 1500 is illustrated. As illustrated in FIG. 28, the plurality of recesses 1586 within the sole plate 1530 are depicted. As noted herein, the plurality of recesses 1586 can have varying depth throughout. In other words, the depth distance of the recesses 1586 in a direction orthogonal to the longitudinal axis L may change along each of the plurality of recesses 1586. In some embodiments, all of the plurality of recesses 1586 may include the same depth throughout the sole structure 1500.

Further, in other embodiments, one or more of the individual recesses of the plurality of recesses 1586 may have the same depth throughout that individual recess, *i.e.,* there is no variability of the depth within a single recess. Alternatively, each of the plurality of recesses 1586 may have a varying depth within the individual recess (see FIG. 28). It is contemplated that the depth and size of each individual recess of the plurality of recesses 1586 may be adjusted depending on the support structure 1510 of the plurality of support regions 1504.

Referring still to FIG. 28, the support structure 1510 of the plurality of support regions 1504 extend partially into the cleats 1520. In some embodiments, the support structure 1510 may extend farther into the cleats 1520 and/or entirely through the cleats 1520. In the case of extending entirely through, the support structure 1510 and/or the reinforcement members 1610 may form a protrusion sticking out of the cleat 1520 and be used for better traction on the ground. Further, in some embodiments, the support structure 1510 may not extend into the cleats 1520. As illustrated in FIG. 28, the support structure 1510 of the plurality of support regions 1504 extend above a top surface 1630 of the sole plate 1530. In some embodiments, the support structure 1510 may not extend above the top surface 1630 of the sole plate 1530. Further, as illustrated in FIG. 28, the reinforcement members 1610 are shown extending through a portion of the support structure 1510.

As noted herein, the plurality of support regions 1504 and/or the reinforcement members 1610 may extend along portions of the sole structure 1500 that are expected to experience comparatively greater pressure, stress, or strain under expected loading due to the geometry and material properties of the sole structure 1500. The plurality of support regions 1504 and/or the reinforcement members 1610 may act as a spring in order to propel a user forward during use. The plurality of support regions 1504 and/or the reinforcement members 1610 may dampen some of the force exerted on the article of footwear by the user. As such, the plurality of support regions 1504 and/or the reinforcement members 1610 may provide functional benefits similar to plates in the sole structure 1500.

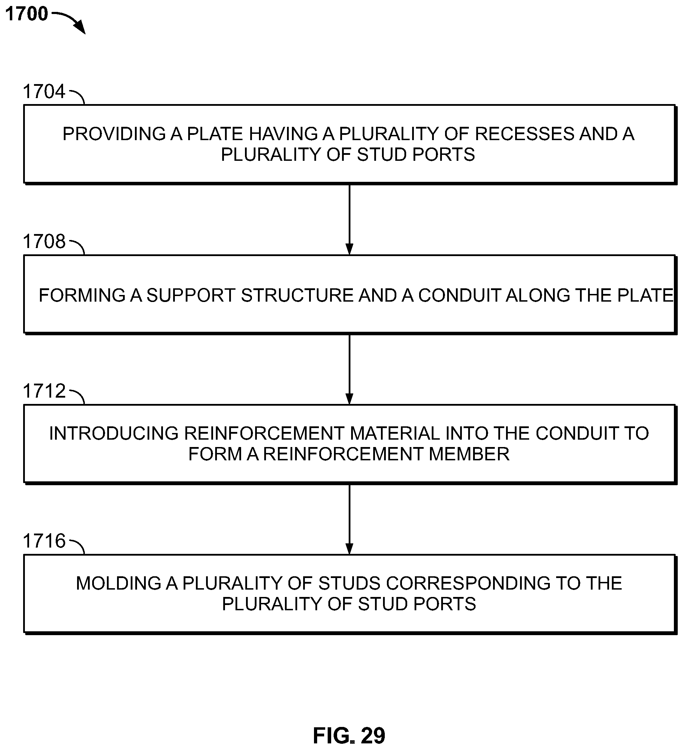

FIG. 29 depicts an exemplary method 1700 for manufacturing the sole structure 1500 of FIG. 25-28. While the example method is described with reference to the flowchart illustrated in FIG. 29, many other methods of forming the sole structure 1500 may alternatively be used.

Referring to FIG. 29, the method 1700 includes a step 1704 of providing a plate, *e.g.,* the sole plate 1530, having a plurality of recesses, *e.g.,* recesses 1586, and a plurality of cleat ports, *e.g.,* cleat ports 1534. The sole plate 1530 can be manufactured using any manufacturing technique. In some embodiments, the sole plate 1530 may be 3D printed. Further, in some embodiments, the sole plate 1530 may be formed from a polymer or metal material. After the sole plate 1530 is provided, at step 1708, the method 1700 includes forming a support structure, *e.g.,* the support structure 1510, and a conduit, *e.g.,* the conduits 1564, 1580, along the plate, *e.g.,* the sole plate 1530. As noted herein, in step 1708, the plurality of support regions 1504, the medial conduit 1580, the lateral conduit 1564, and/or the plurality of support links 1540 may be added to the sole plate 1530. The support structure 1510, the support links 1540, and the conduits 1564, 1580 may be added using 3D printing or a different additive manufacturing process. In some embodiments, the support structure 1510, the support links 1540, and/or the conduits 1564, 1580 may be added via injection molding.

Referring still to FIG. 29, the method 1700 further includes a step 1712 of introducing reinforcement material, *e.g.,* the reinforcement material 132, into the conduit, *e.g.,* the conduits 1564, 1580, to form a reinforcement member, *e.g.,* the reinforcement members 1610. As noted herein, the introduction of the reinforcement material 132 into the conduits 1564, 1580 may be the same as described above with respect to the conduits 128. In some embodiments, after step 1712, the conduits 1564, 1580 (now the reinforcement members 1610) may be trimmed and/or cut in a similar way as described above.

Referring still to FIG. 29, the method 1700 further includes a step 1716 of molding a plurality of cleats, *e.g.,* the plurality of cleats 1520, corresponding to the plurality of cleat ports, *e.g.,* the plurality of cleat ports 1534. In step 1716, the sole plate 1530 may be overmolded or injection molded to add the plurality of cleats 1520 and/or the encasing material 1596. In some embodiments, the sole plate 1530 with the support structure 1510 may be added to multiple molds to add the encasing material 1596 and the plurality of cleats 1520 thereon. Once step 1716 is finalized, the sole structure 1500 is completely formed and may be added to another sole structure and/or an upper to form an article of footwear.

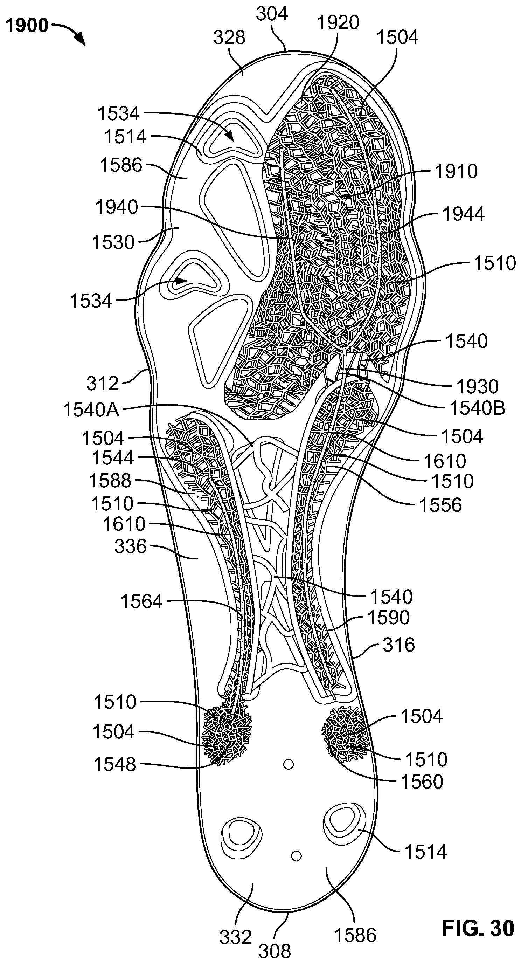

Referring to FIG. 30, another embodiment of a sole structure 1900 is illustrated. Like reference numerals and terms will be used to describe aspects of the sole structure 1900 that are structurally and functionally equivalent with those of the sole structure 300 of FIGS. 3-11 and the sole structure 1500 of FIGS. 25-29. As noted herein, the sole structure 1900 is similar to the sole structure 1500 described above in FIGS. 25-29 except for the features outlined below. As illustrated in FIG. 30, the sole structure 1900 includes a medial forefoot support portion 1910 that is larger than the medial forefoot support portion 1552 in FIGS. 25-29. The medial forefoot support portion 1910 is connected to the medial midfoot support portion 1556 by the plurality of support links 1540. The medial forefoot support portion 1910 extends along a majority of the forefoot region 328 and over multiple of the cleat ports 1534. The sole plate 1530 also includes a forefoot recess 1920 that includes the medial forefoot support portion 1910. As noted herein, FIG. 30 illustrates the sole structure 1900 before the cleats 1520 and the encasing material 1596 are added.

Referring still to FIG. 30, a medial conduit 1930 extends through the toe side of the medial midfoot support portion 1556 and into the medial forefoot support portion 1910. The medial conduit 1930 extends through the plurality of support links 1540 on its way to the medial forefoot support portion 1910. While in the medial forefoot support portion 1910, the medial conduit 1930 splits into a first branch 1940 and a second branch 1944 of the medial conduit 1930. The first branch 1940 of the medial conduit 1930 extends toward the lateral side 312 of the sole structure 1900 and the second branch 1944 extends toward the medial side 316 of the sole structure 1900. Both the first branch 1940 and the second branch 1944 of the sole structure 1900 extend toward the toe end 304 of the sole structure 1900. The first branch 1940 and the second branch 1944 extend over a few of the cleat ports 1534. However, in some embodiments, the first branch 1940 and the second branch 1944 may not extend over the cleat ports 1534. Further, in some embodiments, the medial conduit 1930 may include more branches than illustrated. Furthermore, in some embodiments, the lateral conduit 1564 may include multiple branches and extend in multiple directions over various portions of the sole structure 1900. The first and second branches 1940, 1944 of the medial conduit 1930 may extend along portions that are expected to experience comparatively greater pressure, stress, or strain under expected loading due to the geometry and material properties of the sole structure 1900. As such, in the present embodiment, the first and second branches 1940, 1944 may extend over the ball of the foot and offer support and/or act as a spring to propel a user forward. In some embodiments, the medial conduit 1930 and the lateral conduit 1564 may be connected at one or more locations.

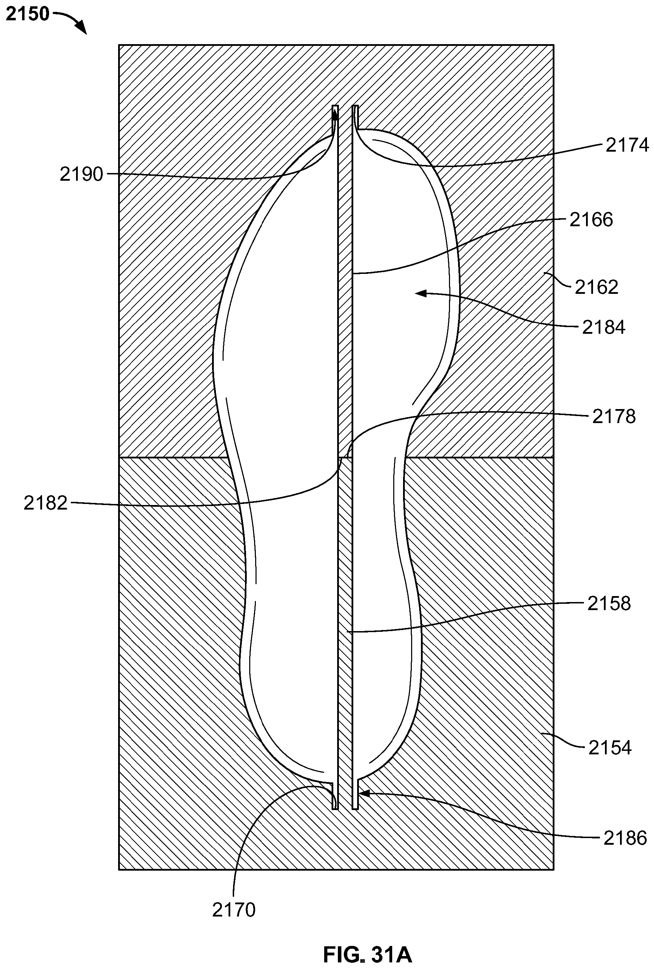

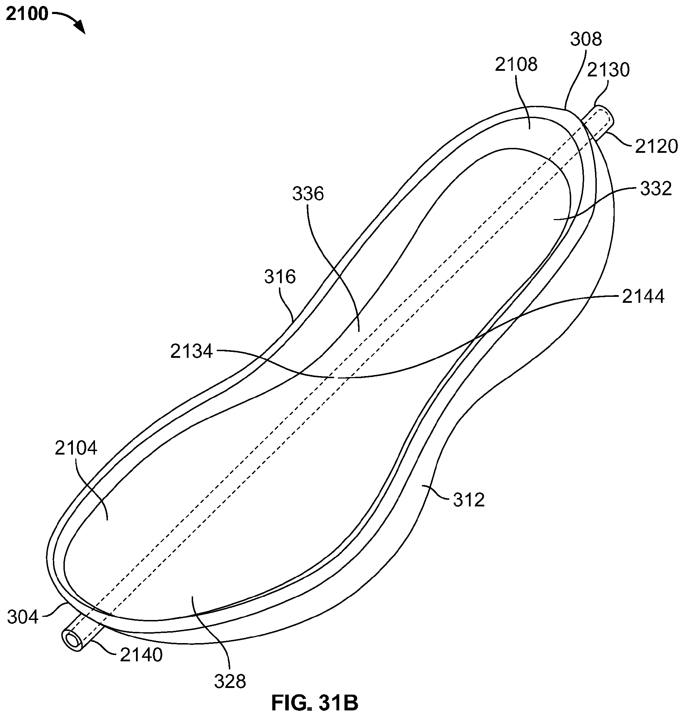

Referring to FIGS. 31A and 31B, another embodiment of a sole structure 2100 is illustrated. Like reference numerals and terms will be used to describe aspects of the sole structure 2100 that are structurally or functionally equivalent with those of the sole structure 300 of FIGS. 3-11 and the sole structure 1500, 1900 of FIGS. 25-29. In some embodiments, the sole structure 2100 may be formed of discrete segments or portions that are interconnected to one another by the reinforcement material 132. As illustrated in FIG. 31B, the sole structure 2100 includes a front portion 2104, a rear portion 2108, and a conduit 2120. The rear portion 2108 includes the heel region 332 and a rear section 2130 of the conduit 2120 that extends from the heel end 308 to a mating surface 2134 of the rear portion 2108. The front portion 2104 includes the forefoot region 328 and a front section 2140 of the conduit 2120 that extends from the toe end 304 to a mating surface 2144 of the front portion 2104. In some embodiments, the front portion 2104 and the rear portion 2108 are molded together as a single, seamless component, such that the mating surfaces 2134, 2144 are seamlessly embedded within the final part of sole structure 2100 (see FIG. 31B). In some embodiments, a marriage mold 2150 can be used to create the sole structure 2100 (see FIG. 31A).

Referring to FIG. 31A, the marriage mold 2150 may include a rear mold part 2154 having a rear core 2158 and a front mold part 2162 having a front core 2166. The rear core 2158 extends from a rear recessed wall 2170 of the rear mold part 2154 and the front core 2166 extends from a front recessed wall 2174 of the front mold part 2162. Once the rear mold part 2154 and the front mold part 2162 are connected to teach other, an end 2178 of the rear core 2158 is in contact with an end 2182 of the front core 2166 and a mold cavity 2184 is formed.

When material is injected into the front mold part 2162 and the rear mold part 2154, the material surrounds the front core 2166 and the rear core 2158 and conforms to the shape of each of the mold cavities to form the sole structure 2100. When the sole structure 2100 is removed from the marriage mold 2150, a continuous, hollow conduit, *i.e.,* the conduit 2120, extends from the rear portion 2108 to the front portion 2104 (see FIG. 31B). Therefore, the rear core 2158 and the front core 2166 of the marriage mold 2150 form the conduit 2120. As noted herein, the conduit 2120 is similar to and may function in a similar way as the conduit 128 described above. The marriage mold 2150 may include one or more channels (not shown) in order to inject material therein.

Referring to FIGS. 31A and 31B, the rear recessed wall 2170 creates a rear cavity 2186 and the front recessed wall 2174 creates a front cavity 2190. The rear cavity 2186 and the front cavity 2190 allow the conduit 2120 to extend or protrude outwardly from the sole structure 2100 (see FIG. 31B). As discussed above, the protruding sections of the conduit 2120 may be removed before or after the reinforcement material 132 is added to the conduit 2120. In some embodiments, the rear mold part 2154 and the front mold part 2162 may include more than one rear and front cores 2166, 2158 therein. For example, the rear mold part 2154 and the front mold part 2162 may include 2, 3, 4, 5, 6 or more rear and front cores 2166, 2158. Therefore, the sole structure 2100 can include multiple conduits 2120 therein. Further, while the rear core 2158 and the front core 2166 are illustrated as being straight, it is contemplated that the rear core 2158 and the front core 2166 may include different shapes and configurations. For example, the rear core 2158 and the front core 2166 may be curved or angled through the rear mold part 2154 and the front mold part 2162. In some embodiments, the rear core 2158 and the front core 2166 may comprise a spline or curved line shape. As such, the conduit(s) 2120 may extend through the sole structure 2100 in any direction or along any pattern, similar to the conduits 128 described above. In alternative embodiments, the rear core 2158 and the front core 2166 may extend in a lateral-medial direction instead of a heel-toe direction.

In some embodiments, the rear mold part 2154 and the front mold part 2162 may not include the rear recessed wall 2170 and the front recessed wall 2174. Thus, in such an embodiment, the sole structure 2100 may not have the conduit 2120 extending outside of the sole structure 2100. In some embodiments, the marriage mold 2150 may include heating and/or cooling ducts to heat and/or cool the material within the marriage mold 2150. Further, in some embodiments, the sole structure 2100 may be formed to have sacrificial structures. The sacrificial structures can be removed after the molding process through heat, light, contact, etc. Furthermore, in some embodiments, one or more elements may be added to the marriage mold 2150 in order to create cavities and openings within the sole structure 2100.

In some embodiments, instead of the rear mold part 2154 and the front mold part 2162, the marriage mold 2150 may include a top mold part and a bottom mold part. Therefore, the top mold part would form the top of the sole structure 2100 and the bottom mold part would form the bottom of the sole structure 2100. The top mold part would have a top core at the bottom of the top mold part and the bottom mold part would have a bottom core at the top of the bottom mold part. The top core and the bottom core would each have a semi-circle shape that mate with each other to form a cylindrical shape or circular cross section when the bottom mold part is secured with the top mold part. The two semi-circle cores would then form the conduit 2120 when molded. In some embodiments, the top mold part and the bottom mold part can be filled with different materials such that the sole structure 2100 formed from the mold may have different hardnesses throughout a vertical dimension (orthogonal from ground when the sole structure 2100 is placed on the ground) of the sole structure 2100.

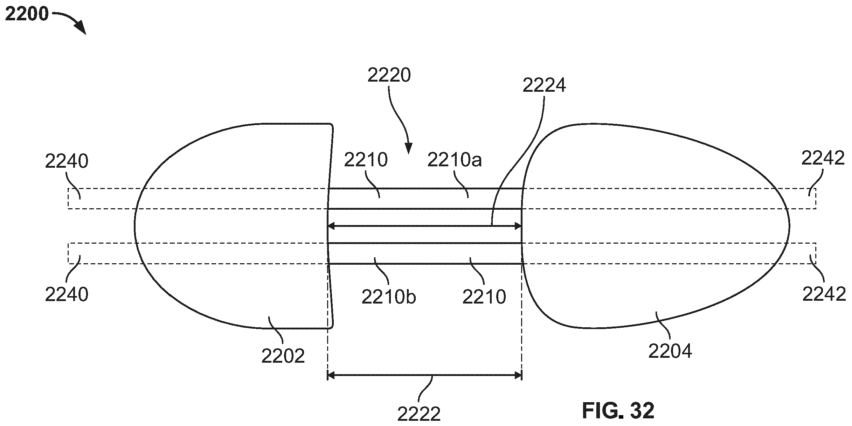

Referring to FIG. 32, another embodiment of a sole structure 2200 is illustrated in a schematic diagram. Like reference numerals and terms will be used to describe aspects of the sole structure 2200 that are structurally or functionally equivalent with those of the sole structure 300 of FIGS. 3-11. As illustrated in FIG. 32, the sole structure 2200 is bifurcated or divided and includes a first sole component 2202 and a second sole component 2204 spaced from the first sole component 2202. The first sole component 2202 is connected with the second sole component 2204 by a plurality of conduits 2210. In some embodiments, the first sole component 2202 is completely separate and independent of the second sole component 2204 except for the connection provided by the plurality of conduits 2210, such that no portion or side of the first sole component 2202 is directly in contact with the second sole component 2204. Put another way, the first sole component 2202 and the second sole component 2204 are discrete and distinct components that are coupled indirectly to one another only by the plurality of conduits 2210. In some embodiments, the plurality of conduits 2210 illustrated in FIG. 32 are the same conduits 128 outlined in FIGS. 3-11 and described above. Thus, the plurality of conduits 2210 are configured to receive the reinforcement material 132 to become the reinforcement members 160 and provide support to the sole structure 2200.

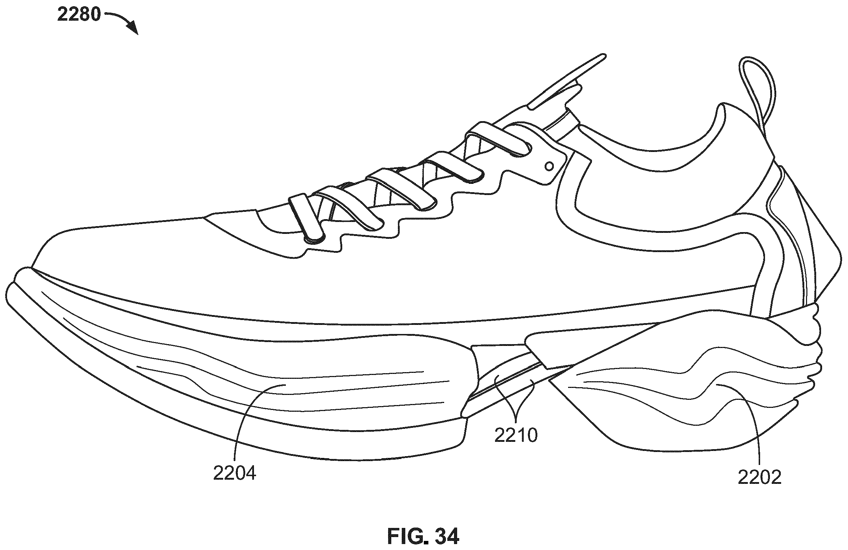

Referring still to FIG. 32, the plurality of conduits 2210 provide a bridge that spans a gap 2220 between the first sole component 2202 and the second sole component 2204. At least one of the conduits 2210 defines a bridge distance 2222 along which a portion of the conduit is exposed and not embedded within either the first sole component 2202 or the second sole component 2204 when extending therebetween. The bridge distance 2222 of at least one of the conduits 2210 is approximately equal to a gap distance 2224 measured between the first component 2202 and the second component 2204. In some embodiments, the bridge distance 2222 is different from the gap distance 2224. In some embodiments, the gap distance 2224 varies in one or more directions, such as, *e.g.,* along a vertical direction (upper-sole) or a lateral direction (medial-lateral). In some embodiments, the bridge distance 2222 has a maximum that is greater than a minimum of the gap distance 2224. In some embodiments, the gap distance 2224 has a maximum that is greater than a maximum of the bridge distance 2222. Therefore, the first sole component 2202 is separate from the second sole component 2204 and the plurality of conduits 2210 are exposed (see FIG. 34). In some embodiments, the first sole component 2202 may be a midsole component, an outsole component, and/or an insole component within or adjacent to a heel region of the sole structure 2200. Further, in some embodiments, the second sole component 2204 may be a midsole component, an outsole component, or an insole component within or adjacent to a forefoot region of the sole structure 2200.

Referring still to FIG. 32, the plurality of conduits 2210 include a first conduit 2210a and a second conduit 2210b. In some embodiments, the plurality of conduits 2210 may include 1,2, 3, 4, 5, 6, 7, 8, 9, 10, or more conduits 2210. However, for ease of illustration, just two conduits 2210 are shown in FIG. 32. Each of the plurality of conduits 2210 extend through the first sole component 2202 and the second sole component 2204. In some embodiments, the plurality of conduits 2210 may only extend partially into the first sole component 2202 and/or the second sole component 2204. In some embodiments, the plurality of conduits 2210 may extend through one of the sole components 2202, 2204 and partially into the other sole component 2202, 2204. Furthermore, in some embodiments, the first conduit 2210a may extend into or through the first sole component 2202 and the second sole component 2204 differently than the second conduit 2210b. Thus, the sole structure 2200 offers a great amount of flexibility of design for the plurality of conduits 2210 to extend partially into and/or through the first sole component 2202 and/or the second sole component 2204. Still further, it is noted that FIG. 32 illustrates the plurality of conduits 2210 as being parallel to each other and straight. However, in some embodiments, the plurality of conduits 2210 may include various curves, contours, and splines similar to the conduits 128 and the plurality of support links 1540 outlined above.

Referring still to FIG. 32, each of the plurality of conduits 2210 include an inlet 2240 and an exhaust or outlet 2242. As noted herein, in some embodiments, the inlet 2240 can be the outlet 2242 and vice versa. As illustrated in FIG. 32, the inlets 2240 and the outlets 2242 of the plurality of conduits 2210 extend out from the first and second sole components 2202, 2204. In some embodiments, the injector module 112 is connected to the inlets 2240 and/or the outlets 2242 to add reinforcement material 132 to the plurality of conduits 2210 in the same way as outlined above with respect to the conduits 128. In some embodiments, after the plurality of conduits 2210 receive the reinforcing material 132, the inlets 2240 and the outlets 2242 are trimmed and/or cut in a similar way as described above. Once the plurality of conduits 2210 are filled with the reinforcing material 132 and the inlets 2240 and outlets 2242 are removed, the sole structure 2200 is overmolded, post-processed (e.g., foamed, coated, treated, painted), or finished to form an article of footwear 2280 (see FIG. 34). In some embodiments, the sole components 2202, 2204 and/or the plurality of conduits 2210 can be treated or coated with a specific material or finish. As noted herein, the dash lines within FIG. 32 illustrates portions of the plurality of conduits 2210 that are either positioned within the first sole component 2202 or the second sole component 2204 or portions of the plurality of conduits 2210 that are removed during a post processing step.

In some embodiments, the illustration in the schematic diagram of FIG. 32 may represent negative space that is added to a mold to form the sole structure 2200. In other words, the general shape and outline of the sole structure 2200, *e.g.,* features of FIG. 32, is added to a mold and material is molded around the shape to from a part of the sole structure 2200. Then, the reinforcement material 132 can be added into the plurality of conduits 2210 and the first and second sole components 2202, 2204 can be injected into this negative space to form the sole structure 2200. In some embodiments, the first sole component 2202 and the second sole component 2204 can just be added into this negative space and do not need to be injected therein. Further, in some embodiments, the first sole component 2202 may be formed separately from the second sole component 2204 and connected together by the plurality of conduits 2210 through another molding process.

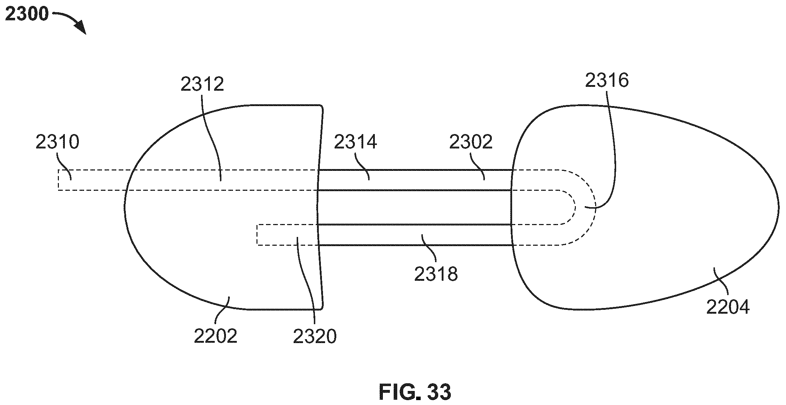

Referring to FIG. 33, another embodiment of a sole structure 2300 is illustrated in a schematic diagram. Like reference numerals and terms will be used to describe aspects of the sole structure 2300 that are structurally or functionally equivalent with those of the sole structure 300 of FIGS. 3-11 and the sole structure 2200 of FIG. 32. As noted herein, the sole structure 2300 is identical to the sole structure 2200 of FIG. 32 except for the configuration of the conduit described below. Specifically, instead of having multiple conduits 2210 like FIG. 32, the sole structure 2300 of FIG. 33 includes a single conduit 2302 that extends continuously from the first sole component 2202 to the second sole component 2204 and then back to the first sole component 2202. The conduit 2302 includes an inlet 2310, a first internal sole component portion 2312, a first exposed portion 2314, a second internal sole component portion 2316, a second exposed portion 2318, and a third internal sole component portion 2320. The second internal sole component portion 2316 forms a curved portion or bend such that it comprises a continuous U-shape that connects the first and second exposed portions 2314, 2318 of the conduit 2302. Therefore, during use, reinforcement material 132 is added to the conduit 2302 via the inlet 2310 and the reinforcement material 132 moves through the conduit 2302 into the third internal sole component portion 2320. As noted herein, the features described above with respect to FIG. 32 may also apply to the sole structure 2200 of FIG. 33.

Referring still to FIG. 33, the sole structure 2300 reduces the amount of waste and features that need to be trimmed after the reinforcement material 132 is added to the sole structure 2300. Thus, just the inlet 2310 would need to be removed after the conduit 2302 becomes the reinforcement members 160. As noted herein, the conduit 2302 can have any type of configuration through the first sole component 2202 and the second sole component 2204. For example, the conduit 2302 may include another U-shaped internal portion within the first sole component 2202 that directs the conduit 2302 back toward or into the second sole component 2204. In such an embodiment, the conduit 2302 would include three exposed portions instead of two. Further, in some embodiments, the conduit 2302 may snake through the first sole component 2202 and the second sole component 2204 in any configuration in order to adequately provide support and reinforcement to different portions of sole structure 2300. As noted herein, the dash lines within FIG. 33 illustrates portions of the conduit 2302 that are either positioned within the first sole component 2202 or the second sole component 2204 or portions of the conduit 2302 that are removed during a post processing step.

Since the sole structure 2300 does not include an outlet portion, the sole structure 2300 requires an injection process that pushes the reinforcement material 132 through the conduit 2302. Thus, the injection process includes an increased injection force to overcome the backpressure due to this closed end configuration. Further, in some embodiments, the sole structure 2300 may include a pressure relief or air displacement system that assists in replacing the air inside the conduit 2302 with the reinforcement material 132. For example, in some embodiments, the pressure relief or air displacement system may include small apertures or air exhausts that connect the third internal sole component portion 2320 with an exterior of the sole structure 2300. In some embodiments, the sole structure 2300 may be formed from a support structure or a lattice structure (*e.g.,* the support structure or lattice structure 170), similar to the component 108, that allows air to escape from the conduit 2302 during the injection process. Furthermore, in some embodiments, the sole structure 2300 may include different curing conditions (*e.g.,* time or temperature) to ensure that the reinforcement material 132 at the closed end in the conduit 2302 is sufficiently cured.

Referring to FIG. 34, the article of footwear 2280 is illustrated. The article of footwear 2280 illustrates the final product of the sole structure 2200 outlined within FIG. 32 and the sole structure 2300 outlined within FIG. 33. As noted herein, the article of footwear 2280 is illustrated with reference numbers corresponding to the sole structure 2200 of FIG. 32. However, it is noted herein that the article of footwear 2280 can also correspond to the sole structure 2300 of FIG. 33. As illustrated in FIG. 34, the article of footwear 2280 includes the first sole component 2202 and the second sole component 2204 connected by the plurality of conduits 2210. As discussed above, the plurality of conduits 2210 are exposed externally to the environment between the first sole component 2202 and the second sole component 2204. As noted herein, the first sole component 2202 is a heel midsole component and the second sole component 2204 is a forefoot midsole component. However, it is contemplated that the first and second sole components 2202, 2204 may be insoles, removable inserts, outsoles, plates or propulsion members, cleats, heel counters, heel cups, tongues, vamps, fastening system components, the entire sole, and/or combinations thereof. As discussed above, the plurality of conduits 2210 formed into the reinforcement members 160 by the reinforcement material 132 provide support and spring-like characteristics to various advantageous portions of the sole structure 2200.

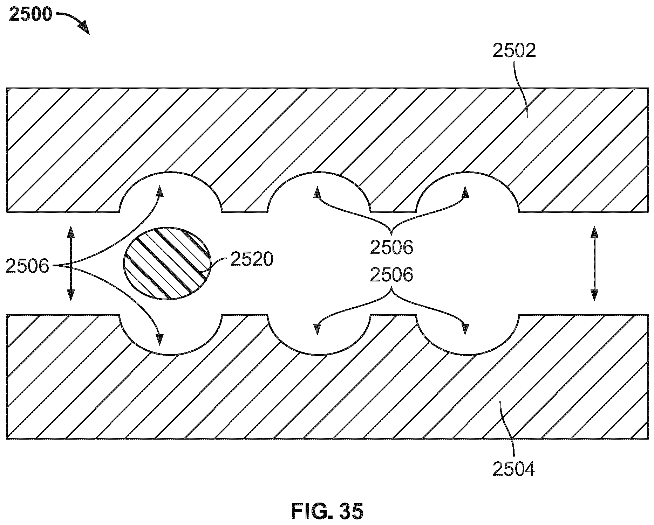

Referring to FIG. 35, a schematic diagram of a cross-sectional view of a mold 2500 is illustrated. The mold 2500 is a marriage mold that includes a first mold part 2502 and a second mold part 2504. The first and second mold parts 2502, 2504 form a plurality of mold cavities 2506 therebetween. As illustrated in FIG. 35, the mold 2500 can form one or more reinforcement member 2520 within the plurality of mold cavities 2506. In some embodiments, the reinforcement member 2520 are similar or identical to the reinforcement member 160 described above. As further illustrated in FIG. 35, the mold 2500 includes three mold cavities 2506. However, it is contemplated that the mold 2500 can include any number of mold cavities 2506.

Referring still to FIG. 35, a process of forming the reinforcement member 2520 will be described below.

First, the first and second mold parts 2502, 2504 are secured together to form the plurality of mold cavities 2506. Then, reinforcement material 132 is injected into the plurality of mold cavities 2506 to form the reinforcement members 2520. Once the reinforcement members 2520 solidify, the first and second mold parts 2502, 2504 are moved away from each other and the reinforcement members 2520 are removed. The reinforcement members 2520 can then be overmolded by a different material to form a sole structure. Thus, the reinforcement members 2520 are formed by the mold 2500 and then the reinforcement members 2520 are inlayed within a different mold to form a sole structure. In some embodiments, the reinforcement members 2520 are formed from a thermoplastic material, a thermoset material, an organic material, or any material having a high strength-to-weight ratio, such as, *e.g.,* a composite including carbon fibers, aramid fibers, glass fibers, boron fibers, or natural or organic fibers, among others.

In some embodiments, the mold 2500 can be rotated and more than one material may be injected into the mold 2500. For example, in some embodiments, a first material may be injected into the mold 2500. Then, the mold may rotate to a different position and a second material, different than the first material, is filled into the remaining space within the plurality of mold cavities 2506. In such an embodiment, the first material would not fill up the entire mold cavity 2506. In some embodiments, the mold 2500 may only include the first mold part 2502 or the second mold part 2504. Thus, a flat surface would be positioned on the first mold part 2502 or the second mold part 2504 such that the mold 2500 would produce semicircle reinforcement members. Two semicircle reinforcement members are molded and then formed together to form the reinforcement member 2520. Each of the two semicircle reinforcement members may be formed from different materials and/or may have different properties than each other. For example, in some embodiments, a first semicircle reinforcement member may have a first hardness and the second semicircle reinforcement member may have a second hardness different than the first hardness. Therefore, the reinforcement member 2520 can be formed to have different material properties or materials throughout the reinforcement member 2520 itself.

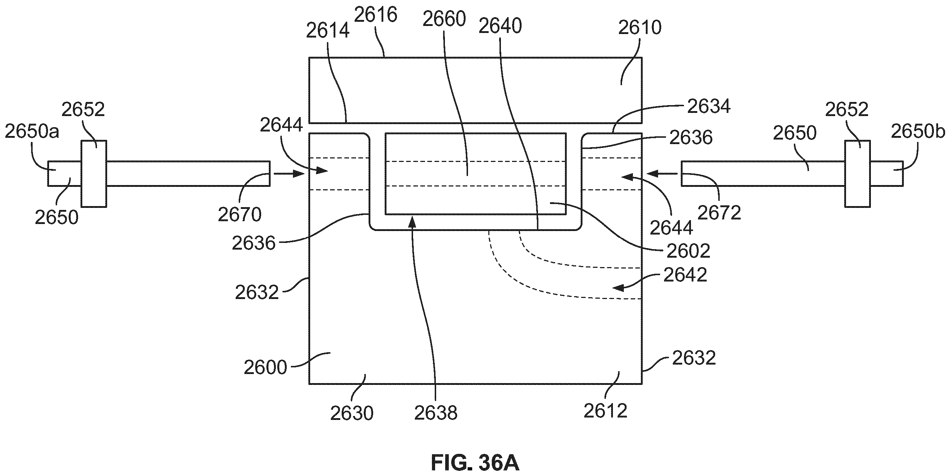

Referring to FIG. 36A, a schematic diagram of a mold 2600 configured to produce a sole component 2602 is illustrated. The mold 2600 includes an upper plate 2610 and a lower plate 2612. The upper plate 2610 has a first wall 2614 and at least one second wall 2616. The lower plate 2612 of the mold 2600 has a body 2630, a plurality of exterior walls 2632, a top wall 2634, a plurality of insertion walls 2636, and at least one cavity 2638, each with a corresponding at least one cavity wall 2640. At least one injection passage 2642 begins at and extends from one of the plurality of exterior walls 2632, through the body 2630, and is fluidly connected to the respective corresponding at least one cavity wall 2640. The first wall 2614 and the top wall 2634 are configured to selectively secure together to create part of the seal for the at least one cavity 2638 so that liquid plastic material can be injected, poured, or sprayed into the at least one cavity 2638 to form the sole component 2602. A plurality of mandrel passages 2644 extend through the plurality of exterior walls 2632, the body 2630, and the plurality of insertion walls 2636.

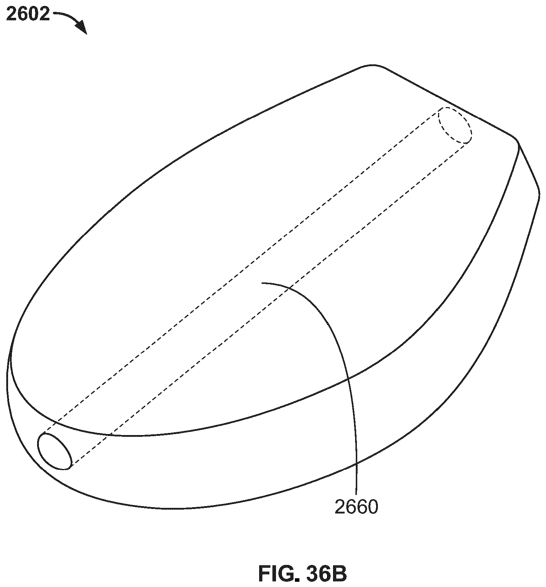

Referring still to FIG. 36A, the mold 2600 is used with a plurality of ray configuration volume elements or mandrels 2650. The plurality of mandrels 2650 are made of a substantially rigid material, such as steel or aluminum. In some embodiments, the mandrels 2650 each have a collar 2652. During use, each mandrel 2650 is configured to extend through one of the plurality of mandrel passages 2644 and into the at least one cavity 2638 of the mold 2600. As such, the plurality of mandrels 2650 form a conduit or channel 2660 within the sole component 2602 (see FIGS. 36A and 36B). The conduit 2660 is then filled with the reinforcement material 132 in a similar way as outlined above with respect to the conduits 128. In some embodiments, the sole component 2602 can include 2, 3, 4, 5, 6, 7, 8, or more conduits 2660 therein.

Referring still to FIG. 36A, a process of forming the sole component 2602 will be described below. First, the upper plate 2610 is positioned on the lower plate 2612 and the plurality of mandrels 2650 are inserted through the plurality of mandrel passages 2644 and into the at least one cavity 2638. A first distal end 2670 of a first mandrel 2650a will contact a second distal end 2672 of a second mandrel 2650b in order to form a continuous negative space within the at least one cavity 2638. Once the mandrels 2650 are inserted into the mold 2600, material is injected through the at least one injection passage 2642 to fill the at least one cavity 2638. In some embodiments, more than one material may be injected through the at least one injection passage 2642 to fill the at least one cavity 2638. Once the at least one cavity 2638 is filled and the material has solidified or cooled, the plurality of mandrels 2650 are removed from the mold 2600. The upper plate 2610 is then removed and the sole component 2602 is removed from the mold 2600 and taken to a different area such that the conduit(s) 2660 is filled with the reinforcement material 132 in a similar process as outlined above. In some embodiments, once the plurality of mandrels 2650 are removed from the mold 2600, the reinforcement material 132 may be injected into the sole component 2602 while the sole component 2602 is still inside of the mold 2600. Thus, in such an embodiment, the reinforcement material 132 may be injected through the plurality of mandrel passages 2644 to get to the conduit 2660. Further, in some embodiments, a tube (not shown) may be inserted through the plurality of mandrel passages 2644 and be connected to the conduit 2660 to insert the reinforcement material 132 therein.

As noted herein, the mold 2600 may include a plurality of sensors to measure the activity within the at least one cavity 2638. Further, in some embodiments, the mold 2600 may include various heating and cooling elements within the upper plate 2610 or the lower plate 2612. For example, in some embodiments, the mold 2600 may include mold conduits within the lower plate 2612 that can move liquid, e.g., refrigerant and/or water, through the body 2630 of the lower plate 2612. The mold conduits can be used to send cold or hot liquid through the lower plate 2612 to further heat or cool the material injected within the mold 2600. Still further, in some embodiments, the upper plate 2610 may include a handle to remove the upper plate 2610 from the lower plate 2612. Furthermore, in some embodiments, the upper plate 2610 may be connected to a lifting mechanism, e.g., a hydraulic lift, hoist, crane, and/or winch, to remove the upper plate 2610 from the lower plate 2612. As noted herein, any of the features described with the mold 2600 may be used with the mold 2500 outlined in FIG. 35.

Referring to FIG. 36B, the sole component 2602 is illustrated removed from the mold 2600. As noted herein, the sole component 2602 can be a heel component, a midfoot component, and/or a forefoot component. Further, the sole component 2602 can be an insole, a midsole, and/or an outsole. Furthermore, depending on the number of mandrels 2650 used in the molding process, the sole component 2602 can include any number of conduits 2660. Furthermore, in some embodiments, the mandrels 2650 may be curved in order to create curved conduits. As noted above, the sole component 2602 are injected with reinforcement material 132 within the conduit 2660. The conduit 2660 is positioned in advantageous positions of the sole component 2602 to help provide further support to the wearer of the sole component 2602.

As described above, the sole structures according to the present disclosure may be formed by a combination of manufacturing techniques, including injection molding, additive manufacturing, and fiber injection. As noted herein, any of the disclosure described in one of the sole structures may be used or implemented in another sole structure. Therefore, it is contemplated that any features described within this disclosure may be used with any other feature therein.

In other embodiments, other configurations are possible. For example, certain features and combinations of features that are presented with respect to particular embodiments in the discussion above can be utilized in other embodiments and in other combinations, as appropriate. Further, any of the embodiments described herein may be modified to include any of the structures or methodologies disclosed in connection with other embodiments. Additionally, the present disclosure is not limited to articles of footwear of the type specifically shown. Still further, aspects of the articles of footwear of any of the embodiments disclosed herein may be modified to work with any type of footwear, apparel, or other athletic equipment.

As noted previously, it will be appreciated by those skilled in the art that while the invention has been described above in connection with particular embodiments and examples, the invention is not necessarily so limited, and that numerous other embodiments, examples, uses, modifications, and departures from the embodiments, examples, and uses are intended to be encompassed by the claims attached hereto. The entire disclosure of each patent and publication cited herein is incorporated by reference, as if each such patent or publication were individually incorporated by reference herein. Various features and advantages of the invention are set forth in the following claims.

The term "about," as used herein, refers to variation in the numerical quantity that may occur, for example, through typical measuring and manufacturing procedures used for articles of footwear or other articles of manufacture that may include embodiments of the disclosure herein; through inadvertent error in these procedures; through differences in the manufacture, source, or purity of the ingredients used to make the compositions or mixtures or carry out the methods; and the like. Throughout the disclosure, the terms "about" and "approximately" refer to a range of values ± 5% of the numeric value that the term precedes. As noted herein, all ranges disclosed herein are inclusive of the outer bounds of the range.

**Claims**

1. A method (700) of manufacturing an article of footwear (380), comprising:

    forming a sole structure (300) using an additive manufacturing system, wherein the sole structure (300) includes a conduit (128) extending within a region of the sole structure (300), and wherein the conduit (128) includes an end (144) that protrudes outwardly from a surface of the sole structure (300) and a channel (152) defined through the conduit (128);
    connecting the end (144) of the conduit (128) to an injector;
    injecting a reinforcement material (132) into the channel (152) of the conduit (128) to form a reinforcement member (160); and
    removing a portion of the end (144) of the conduit (128).

2. The method (700) of claim 1, wherein the sole structure (300) includes a lattice region (190) having a lattice structure (170) comprising a plurality of beams (174) interconnected by a plurality of nodes (178) and defining a plurality of voids (182).

3. The method (700) of claim 1 or 2, wherein the sole structure (300) includes a midfoot region (336) that is located between a forefoot region (328) and a heel region (332), a top surface (348) that is opposite a bottom surface (352), and a lateral side (312) that is opposite a medial side (316), and wherein the conduit (128) is disposed within each of the forefoot (328), midfoot (336), and heel regions (332), and wherein the end (144) of the conduit (128) is adjacent at least one of the top surface (348) or the bottom surface (352).

4. The method (700) of claim 3, wherein a sidewall extends from the lateral side (312) to the medial side (316) and from the forefoot region (328) to the heel region (332), and wherein the end (144) of the conduit (128) is disposed along the sidewall in at least one of the heel region (332) or the forefoot region (328).

5. The method (700) of one of the preceding claims further comprising:
   creating a design model of the sole structure (300) including an arrangement of the conduit (128), wherein the additive manufacturing system is configured to receive the design model to form the sole structure (300).

6. The method (700) of one of the preceding claims further comprising:
   curing the reinforcement material (132) within the sole structure (300), wherein curing includes an application of a at least one of heat, light, or electricity to cure the material.

7. The method (700) of one of the preceding claims, wherein the sole structure (300) is composed of a material that is different from the reinforcement material (132) that is injected into the conduit (128) to form the reinforcement member (160).

8. The method (700) of one of the preceding claims, wherein the reinforcement material (132) includes a continuous fiber and a resin material.

9. The method (700) of one of the preceding claims, wherein the channel (152) is at least partially filled with the reinforcement material (132).

10. The method (700) of one of the preceding claims, wherein the channel (152) is entirely filled with the reinforcement material (132).

11. A method (1700) of manufacturing a sole structure (1500), comprising:

    providing a sole plate (1530);
    additively forming a plurality of support regions (1504) and at least one conduit (1564) on the sole plate (1530), the at least one conduit (1564) including a channel defined through the at least one conduit (1564), wherein the at least one conduit (1564) extends through a portion of at least one of the plurality of support regions (1504);

injecting a reinforcement material (132) into the channel of the at least one conduit (1564) to form a reinforcement member (1610); and

molding the sole plate (1530) with the plurality of support regions (1504) and the at least one conduit (1564) within an encasing material (1596).

12. The method (1700) of claim 11, wherein the encasing material (1596) forms a plurality of cleats (1520).

13. The method (1700) of claim 12, wherein at least one of the plurality of support regions (1504) is positioned directly between at least one of the plurality of cleats (1520) and a top surface (348) of the sole structure (1500).

14. The method (1700) of claim 12 or 13, wherein at least one of the plurality of support regions (1504) is positioned partially within at least one of the plurality of cleats (1520).

15. The method (1700) of one of the claims 11 to 14, wherein the sole plate (1530) includes a plurality of recesses (1586), and

wherein the plurality of support regions (1504) are positioned within the plurality of recesses (1586).

FIG. 1

EP 4 659 614 A1

FIG. 2

FIG. 3

FIG. 4

FIG. 5

FIG. 6

FIG. 7

FIG. 8

FIG. 9

FIG. 10

FIG. 11

FIG. 12

FIG. 13

**FIG. 14**

FIG. 15

FIG. 16

FIG. 17

FIG. 18

FIG. 19

**FIG. 20**

**FIG. 21**

FIG. 22

108

372
316
840
T1
832
872
444
824
800
WT1
804
LP
820
808 884
348
888
T2 828
352
320
316
324
812
892
880
312
368
836
860
876
868
864

50

**FIG. 23**

**FIG. 24**

EP 4 659 614 A1

FIG. 25

FIG. 26

FIG. 27

FIG. 28

1700

1704

PROVIDING A PLATE HAVING A PLURALITY OF RECESSES AND A PLURALITY OF STUD PORTS

1708

FORMING A SUPPORT STRUCTURE AND A CONDUIT ALONG THE PLATE

1712

INTRODUCING REINFORCEMENT MATERIAL INTO THE CONDUIT TO FORM A REINFORCEMENT MEMBER

1716

MOLDING A PLURALITY OF STUDS CORRESPONDING TO THE PLURALITY OF STUD PORTS

FIG. 29

FIG. 30

**FIG. 31A**

**FIG. 31B**

FIG. 32

EP 4 659 614 A1

**FIG. 33**

FIG. 34

**FIG. 35**

FIG. 36A

2602

2660

**FIG. 36B**

Europäisches
Patentamt

European
Patent Office

Office européen
des brevets

# EUROPEAN SEARCH REPORT

**Application Number**

EP 25 17 7953

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2021/259358 A1 (PATERSON ROBBIE [DE] ET AL) 26 August 2021 (2021-08-26)<br>* figures *<br>* paragraph [0120] *<br>* paragraph [0112] *<br>----- | 1-15 | INV.<br>A43B13/02<br>A43B13/04<br>A43B13/12<br>A43B13/14<br>A43B13/18<br>B33Y80/00 |
| A | US 2021/298415 A1 (KITA KENJIRO [JP] ET AL) 30 September 2021 (2021-09-30)<br>* figures *<br>* paragraph [0008] *<br>----- | 1-15 | |
| A | US 2005/268489 A1 (AUSTIN TYRONE L [US]) 8 December 2005 (2005-12-08)<br>* figures *<br>* paragraph [0066] - paragraph [0067] *<br>----- | 1-15 | |

**TECHNICAL FIELDS SEARCHED (IPC)**

A43B
B33Y

The present search report has been drawn up for all claims

| Place of search | Date of completion of the search | Examiner |
|---|---|---|
| The Hague | 19 August 2025 | Ariza De Miguel, Jon |

EPO FORM 1503 03.82 (P04C01)

## ANNEX TO THE EUROPEAN SEARCH REPORT
## ON EUROPEAN PATENT APPLICATION NO.

EP 25 17 7953

This annex lists the patent family members relating to the patent documents cited in the above-mentioned European search report.
The members are as contained in the European Patent Office EDP file on
The European Patent Office is in no way liable for these particulars which are merely given for the purpose of information.

19-08-2025

| Patent document cited in search report | Publication date | Patent family member(s) | Publication date |
|---|---|---|---|
| US 2021259358 A1 | 26-08-2021 | CN 113287829 A | 24-08-2021 |
| | | CN 113287830 A | 24-08-2021 |
| | | CN 118680363 A | 24-09-2024 |
| | | DE 102020202237 A1 | 26-08-2021 |
| | | EP 3868242 A2 | 25-08-2021 |
| | | EP 3868243 A1 | 25-08-2021 |
| | | EP 4241605 A2 | 13-09-2023 |
| | | JP 7355771 B2 | 03-10-2023 |
| | | JP 7592512 B2 | 02-12-2024 |
| | | JP 2021133244 A | 13-09-2021 |
| | | JP 2021133245 A | 13-09-2021 |
| | | JP 2023143905 A | 06-10-2023 |
| | | US 2021259357 A1 | 26-08-2021 |
| | | US 2021259358 A1 | 26-08-2021 |
| | | US 2024008595 A1 | 11-01-2024 |
| | | US 2025151843 A1 | 15-05-2025 |
| US 2021298415 A1 | 30-09-2021 | DE 102021107751 A1 | 30-09-2021 |
| | | JP 7474092 B2 | 24-04-2024 |
| | | JP 2021154026 A | 07-10-2021 |
| | | US 2021298415 A1 | 30-09-2021 |
| US 2005268489 A1 | 08-12-2005 | NONE | |

EPO FORM P0459

For more details about this annex : see Official Journal of the European Patent Office, No. 12/82